(19) Europäisches Patentamt
European Patent Office
Office européen des brevets

(11) **EP 3 894 604 B1**

(12) **EUROPÄISCHE PATENTSCHRIFT**

(45) Veröffentlichungstag und Bekanntmachung des Hinweises auf die Patenterteilung:
**17.07.2024   Patentblatt 2024/29**

(21) Anmeldenummer: **21705908.8**

(22) Anmeldetag: **12.02.2021**

(51) Internationale Patentklassifikation (IPC):
*C21D 8/04* (2006.01)     *C22C 38/00* (2006.01)
*C22C 38/02* (2006.01)     *C22C 38/04* (2006.01)
*C22C 38/06* (2006.01)     *C23C 8/26* (2006.01)
*C21D 9/48* (2006.01)     *C23C 8/02* (2006.01)
*C23C 8/80* (2006.01)

(52) Gemeinsame Patentklassifikation (CPC):
**C22C 38/001; C21D 8/0426; C21D 8/0436; C21D 8/0473; C21D 9/48; C22C 38/02; C22C 38/04; C22C 38/06; C23C 8/02; C23C 8/26; C23C 8/80**

(86) Internationale Anmeldenummer:
**PCT/EP2021/053414**

(87) Internationale Veröffentlichungsnummer:
**WO 2021/175562 (10.09.2021 Gazette 2021/36)**

(54) **KALTGEWALZTES STAHLFLACHPRODUKT FÜR VERPACKUNGEN**

COLD ROLLED FLAT STEEL PRODUCT FOR PACKAGING

PRODUIT PLAT EN ACIER LAMINÉ À FROID POUR EMBALLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2020   DE 102020106164**

(43) Veröffentlichungstag der Anmeldung:
**20.10.2021   Patentblatt 2021/42**

(73) Patentinhaber: **ThyssenKrupp Rasselstein GmbH**
**56624 Andernach (DE)**

(72) Erfinder:
• **Kaup, Burkhard**
**56626 Andernach (DE)**
• **Heine, Luisa-Marie**
**56068 Koblenz (DE)**
• **Massicot, Blaise**
**56659 Burgbrohl (DE)**

(74) Vertreter: **Charrier Rapp & Liebau**
**Patentanwälte PartG mbB**
**Fuggerstraße 20**
**86150 Augsburg (DE)**

(56) Entgegenhaltungen:
EP-A1- 3 138 936     EP-B1- 2 835 438
WO-A1-2016/031234

EP 3 894 604 B1

**Beschreibung**

Die Erfindung betrifft ein Stahlflachprodukt für Verpackungen aus einem kaltgewalzten Stahlblech mit einer Dicke von weniger als 0,5 mm.

Aus Gründen der Ressourceneffizienz und der Kostenreduzierung bestehen Bestrebungen, die Dicke von Stahlflachprodukten (Stahlbleche und Stahlbänder) für die Herstellung von Verpackungen (im Folgenden auch als Verpackungsstahl bezeichnet) zu reduzieren. Übliche Dicken von kaltgewalzten Verpackungsstählen liegen im Feinstblechbereich, also zwischen 0,1 und 0,5 mm. Da eine Dickenreduktion jedoch eine Erniedrigung der Steifigkeit des Materials zur Folge hat, muss die Festigkeit des Verpackungsstahls erhöht werden, damit das Material den Anforderungen an die Kaltverformbarkeit in Umformprozessen bei der Herstellung von Verpackungen, wie z.B. beim Tiefziehen oder Abstreckziehen, standhalten kann. Gleichzeitig muss jedoch auch die Umformfähigkeit des Stahlblechs bei der Kaltverformung gewährleistet bleiben. Es besteht daher ein Bedürfnis für hochfeste Stahlbleche mit einer Zugfestigkeit von mehr als 600 MPa, welche gleichzeitig auch bei geringen Dicken im Bereich von 0,14 bis 0,5 mm und insbesondere zwischen 0,20 und 0,35 mm gute Kenngrößen für die Umformfähigkeit wie z.B. eine hohe Bruchdehnung und/oder einen hohen Erichsenindex (gem. DIN 50101 auch als Erichsentiefe bezeichnet, gemessen nach der in DIN EN ISO 20482 standardisierten Tiefungsprüfung nach Erichsen; die Begriffe "Erichsentiefe" und "Erichsenindex" bzw. "Erichsenwert" werden als synonym betrachtet) aufweisen.

Aus der EP 2 835 438 B1 ist ein gut umformbares Stahlblech für Aufreißdeckel von Dosen bekannt, welches einen Kohlenstoffanteil von 0,020 bis 0,040 Gew. % und einen Stickstoffanteil von 0,013 bis 0,017 Gew. % sowie eine Zugfestigkeit in einer Walzrichtung von mindestens 520 MPa und einen Erichsenindex (Erichsentiefe) von mindestens 5,0 mm aufweist, wobei das Stahlblech eine Beschichtung aus einem Harzfilm mit einer Dicke von 5 bis 100 μm enthält. In den Beispielen sind mit einem Harzfilm beschichtete Stahlbleche offenbart, welche Zugfestigkeiten von bis zu 591 MPa bei einem Erichsenindex von mehr als 5 mm aufweisen. Zugfestigkeiten von weniger als 600 MPa sind jedoch für viele Anwendungen von Verpackungsstählen und insbesondere von kaltgewalzten Stahlblech mit einer Dicke von weniger als 0,3 mm nicht ausreichend, um daraus in Umformverfahren mit sehr hohen Verformungsgraden stabile Verpackungen herstellen zu können. Insbesondere für die Herstellung von Aufreißdeckeln von Dosen ("easy-open-ends", EOE) oder von Aerosoldosen bzw. Aerosoldosen-Komponenten, wie z.B. Aerosoldosen-Böden werden Stahlbleche im Dickenbereich von 0,14 bis 0,28 mm (für Aufreißdeckel) und im Dickenbereich von 0,22 bis 0,49 mm (z.B. für Aerosoldosenböden) mit Zugfestigkeiten von mehr als 600 MPa und einem Erichsenindex von mindestens 4,3 mm für Aufreißdeckel und von mehr als 5 mm für Aerosoldosenböden benötigt, um die Anforderungen an die Umformfähigkeit des Ausgangsmaterials und die Stabilität des Endprodukts zu erfüllen.

Es existieren zahlreiche Möglichkeiten für die Festigkeitssteigerung von Stahlblechen, wie z.B. Kaltverfestigung, Mischkristallverfestigung (durch Zulegieren von Kohlenstoff, Stickstoff Phosphor, Mangan und/oder Silizium), Ausscheidungsverfestigung, Festigkeitssteigerung durch Einstellung eines mehrphasigen Stahlgefüges oder Feinkornhärtung. Viele dieser Maßnahmen zur Festigkeitssteigerung von Stählen haben jedoch unerwünschte Begleiterscheinungen.

Mit zunehmender Kaltverfestigung nehmen bspw. Längs- und Querunterschiede in der Fertigung von kaltgewalzten Stahlblechen und folglich die Anisotropie zu und gleichzeitig fällt die Dehnbarkeit überproportional ab.

Bei der Mischkristallverfestigung werden Fremdatome (beispielsweise N, C, P, Mn, Si) interstitiell oder substitutionell im Wirtsgitter des Stahls eingelagert. Viele der möglichen Legierungselemente haben allerdings negative Begleiterscheinungen (so ist P bspw. ein Stahlschädling,Mn und Si verschlechtern die Oberflächenqualität), weswegen eine Festigkeitssteigerung durch Zugabe dieser Legierungselemente nicht zielführend ist.

Durch Zulegieren von Kohlenstoff steigt zwar die Festigkeit des Stahls mit zunehmendem Kohlenstoffgehalt an, gleichzeitig entsteht jedoch während der Verarbeitung des Stahlblechs eine ausgeprägte Anisotropie in Form einer Zeiligkeit, da der Kohlenstoff aufgrund der niedrigen Löslichkeit im Ferritgitter des Stahls maßgeblich in Form von Zementit vorliegt. Darüber hinaus verschlechtert sich mit zunehmendem Kohlenstoffgehalt die Oberflächenqualität und die Gefahr von Brammenrissen steigt mit Annäherung an den peritektischen Punkt. Weiterhin wird mit zunehmendem Kohlenstoffgehalt das Umformverhalten des Stahls verschlechtert. Deshalb ist eine Begrenzung des Kohlenstoffgehalts auf maximal 0,1 Gew. % zielführend, da nur so effektiv die Bildung von Brammenrissen und die daraus resultierende punktförmige Oxidation (Diffusion von Sauerstoff in Risse) sowie eine zu starke Erniedrigung der Erichsentiefe vermieden werden können. Aus dem Stand der Technik sind Stahlbleche für Verpackungen und Verfahren zu deren Herstellung bekannt, in denen der Stahlschmelze eine für eine Mischkristallverfestigung ausreichende Menge an Kohlenstoff und Stickstoff zugegeben wird, um Festigkeiten von mehr als 500 MPa zu erzielen, bspw. WO2016/031234. So zeigt bspw. die US 2011/0076177 A1 ein hochfestes Stahlblech für die Dosenherstellung mit einem auf das Gewicht bezogenen Kohlenstoffgehalt von 0,02 % bis 0,10 % und einem Stickstoffgehalt von 0,012 % bis 0,0250 %, welches Zugfestigkeiten von mehr als 500 MPa aufweist, wobei der ungebundene, d.h. interstitiell im Stahl eingelagerte Gewichtsanteil des Stickstoffs bei mindestens 0,0100 Gew. % liegt. In den Beispielen der US 2011/0076177 A1 sind Stahlbleche aufgeführt, welche nach einem Alterungsprozess Zugfestigkeiten von bis zu 540 MPa bei einer Bruchdehnung von mindestens 10% aufweisen. Dabei wurde festgestellt, dass insbesondere der ungebundene Stickstoff zu einer Steigerung der Festigkeit des Stahls durch Mischkristallverfestigung und Alterungshärten beiträgt. Die durch eine interstitielle Einlagerung von Stickstoff erzielbare Festigkeitssteigerung ist dabei allerdings einerseits durch teilweise Abbindung des Stickstoffs zu Nitriden, insbesondere zu AlN, und andererseits dadurch begrenzt, dass bei einem Stickstoffgehalt von mehr als 0,025 Gew. % die Gefahr von Brammenbrüchen beim Warmwalzen beträchtlich zunimmt.

Bei einer Ausscheidungsverfestigung, bspw. durch Zulegieren von Ti oder Nb, besteht ein Problem darin, dass sich aufgrund der hohen Temperatur bereits beim Warmwalzen Ausscheidungen bilden. Folglich sind diese an allen nachfolgenden Fertigungsstufen, wie Kaltwalzen, Glühen und ggf. Nachwalzen oder Dressieren, beteiligt und entwickeln dabei, vergleichbar zum Zementit, eine ausgeprägte Anisotropie, insbesondere wenn die Ausscheidung bevorzugt auf Korngrenzen erfolgt. Ferner tragen die Ausscheidungsbildner Ti und Nb zu einer Erhöhung der Rekristallisationstemperatur bei.

Die Festigkeitssteigerung durch Ausbildung eines mehrphasigen Gefüges im Stahl ist bei Verpackungsstahl aufgrund der normativen Vorgaben in Bezug auf die Legierungsbestandteile des Stahls von vornherein sehr begrenzt. Die konventionellen Mehrphasenstähle, wie sie z.B. in der Automobilindustrie Einsatz finden, können daher für Verpackungsstahl nicht verwendet werden, weil bspw. die zur Ausbildung eines Mehrphasengefüges verwendeten Legierungsbestandteile wie Mangan und Silizium in Verpackungsstählen aufgrund der normativen Vorgaben durch die Verpackungsstahlnorm (DIN EN 10202) nur bis zu einem maximalen Gewichtsanteil eingesetzt werden können. Die Einstellung eines mehrphasigen Gefüges ist zwar bei Verpackungsstahl mittels einer speziellen Kühltechnik möglich. Die resultierenden Gefügezustände zeichnen sich jedoch durch eine hohe Instabilität aus und der Festigkeitsanstieg geht zumeist einher mit einer Reduktion der Umformbarkeit. Falls das mehrphasige Gefüge maßgeblich auf dem Legierungselement Kohlenstoff basiert, besteht ferner die Gefahr, dass die Anisotropie des Zementits an das mehrphasige Gefüge weitergegeben wird und sich dadurch noch verstärkt.

Bei der Feinkornhärtung ist zwar über die Einstellung eines feinkörnigen Gefüges die Festigkeit des Stahls bei gleichbleibender Umformfähigkeit steigerbar, wobei das feinkörnige Gefüge prozesstechnisch über eine niedrige Haspeltemperatur (Aufwickeltemperatur nach dem Warmwlazen), hohe Kaltwalzgrade und durch Glühen des kaltgewalzten Stahlblechs im Durchlaufglühen erzielt werden kann. Ferner lässt sich die Ausbildung eines feinkörnigen Gefüges über Mikrolegierung und Einflussnahme auf das Ausscheidungsverhalten im Warmband einstellen. Die dafür notwendigen Legierungselemente sind jedoch teuer und steigern die zur Rekristallisation notwendige Glühtemperatur. Darüber hinaus verschlechtert sich aufgrund einer erhöhten Grundfestigkeit des Warmbandes die Kaltwalzbarkeit und die Oberfläche des Stahlblechs wird fehleranfälliger.

Die genannten Möglichkeiten zur Erhöhung der Festigkeit von Stahlblechen unter Beibehaltung der Umformfähigkeit führen demnach insbesondere in Bezug auf die Isotropie, d.h. bezüglich der Richtungsabhängigkeit der Werkstoffeigenschaften, zu Problemen. Da Verpackungen wie z.B. Aerosol-, Getränke- oder Konservendosen, zumeist (rotations-)symmetrische Bauteile sind, liegen die Stahlbleche, die zur Herstellung von Verpackungen verwendet werden, häufig in Form von Ronden (d.h. eines ebenen, kreisrunden Blechzuschnitts) vor, die in Tiefzieh- und Abstreckziehverfahren zu einem zylindrischen Dosenkörper oder einem kreisförmigen Dosenboden oder -deckel umgeformt werden. Aufgrund der Symmetrie des Endprodukts werden deshalb für die Bleche möglichst isotrope Materialeigenschaften gefordert, d.h. die Eigenschaften von Verpackungsblechen sollen in allen Richtungen der Blechebene möglichst gleich sein. Bei kaltgewalzten Stahlblechen, die fertigungsbedingt in Form eines Stahlbands vorliegen, ist dies sehr anspruchsvoll, da durch die Walzrichtung beim Warmwalzen und Kaltwalzen fertigungsbedingt immer eine Richtungsabhängigkeit der Materialeigenschaften vorhanden ist. Kaltgewalzte Stahlbleche weisen deshalb herstellungsbedingt stets eine ausgeprägte Anisotropie auf. Diese begründet sich maßgeblich im hohen Kaltwalzgrad, welcher wiederum notwendig zur Realisierung der extrem dünnen Blechdicken ist. Da die Verarbeitung des kaltgewalzten Stahlblechs bei der Herstellung von Verpackungen grundsätzlich unabhängig von der Walzrichtung erfolgt, treten beim Umformprozess häufig Schwierigkeiten auf, da bspw. die Festigkeit und die Umformfähigkeit über den Umfang der Ronde nicht homogen sind.

Es besteht daher ein Bedürfnis für einen Verpackungsstahl in Form eines kaltgewalzten Stahlflachprodukts, welches sich einerseits durch eine hohe Festigkeit von mehr als 600 MPa und andererseits über ein hohes und möglichst isotropes Umformvermögen innerhalb der Blechebene des Stahlflachprodukts auszeichnet. Im Kontext der kontinuierlichen Dickenreduzierung des Stahlflachprodukts und der dafür notwendigen Festigkeitssteigerung stellt dies eine gegensätzliche Zielsetzung dar, welche schwierig zu realisieren ist. Weiterhin sind neben den isotropen Eigenschaften des Stahlflachprodukts weitere Anforderung an die Verpackungsstähle bei der Herstellung von Verpackungen zu berücksichtigen, insbesondere in Bezug auf die Flexibilität der Umformprozesse und die Formen der Verpackungen, die Reduzierung des Materialausschusses sowie die hierfür notwendige Realisierung von möglichst gleichförmigen und homogenen Eigenschaften der Verpackung.

Eine Aufgabe der Erfindung besteht daher in der Bereitstellung eines hochfesten Stahlflachprodukts zur Herstellung von Verpackungen mit einem möglichst hohen und isotropen Umformvermögen, aus dem Verpackungen mit überragenden isotropen Eigenschaften und mit unterschiedlichsten Geometrien sowie in verschiedenen Umformverfahren mit möglichst geringem Materialausschuss herstellbar sind.

Da Verpackungsstahl im gealterten Zustand, d.h. nach längerer Lagerungsdauer und ggf. nach einer Lackierung und Trocknung, zur fertigen Verpackung verarbeitet wird, muss eine Werkstoffoptimierung unter Berücksichtigung der Effekte bei einer Alterung des Materials erfolgen, welche nach einer längeren Lagerung und/oder nach einem Auflaminieren einer Kunststofffolie oder einer Lackierung mit anschließender Trocknung eintreten. Die technologischen Kennwerte von Verpackungsstählen werden deshalb nach einer künstlichen Alterung des Materials erfasst, welche gemäß der Norm DIN EN 10202 bspw. durch Erwärmung der Probe für 20 Minuten auf 200°C erfolgen kann. Da bei der (natürlichen oder künstlichen) Alterung von Stahlblechen insbesondere die Festigkeit und Umformfähigkeit beeinflusst wird, müssen die Alterungseffekte bei der Optimierung der Materialeigenschaften berücksichtigt werden.

Die Verbesserung der Materialeigenschaften von kaltgewalzten Stahlblechen in Bezug auf Festigkeit und Umformfähigkeit geht wegen der oben aufgeführten Gründe zu Lasten der Isotropie der Materialeigenschaften. Zur Erzielung von isotropen Eigenschaften von Stahlblechen existieren diverse metallurgische und verfahrenstechnische Möglichkeiten bei der Herstellung kaltgewalzter Stahlbleche. Eine Option, gezielt die Isotropie von kaltgewalzten Stahlblechen zu verbessern, besteht bspw. im Zulegieren von Bor. Bor hat jedoch nachteilige Auswirkungen auf die Verarbeitbarkeit des Stahls und das Endprodukt (Stahlblech). So steigt durch die Zulegierung von Bor die für eine Rekristallisation des Stahlblechs nach dem Kaltwalzen notwendige Glühtemperatur, die Schweißbarkeit des Materials verschlechtert sich und das Alterungspotential (d.h. die Festigkeitssteigerung bei einer Alterung des Stahlblechs) nehmen ab.

Eine weitere Aufgabe der Erfindung ist daher darin zu sehen, kostengünstig und prozesstechnisch einfach herstellbare Verpackungsstähle und Verfahren zu deren Herstellung aufzuzeigen, die einerseits eine möglichst hohe Festigkeit unter Beibehaltung einer für das Tiefziehen und Abstreckziehen ausreichend guten Umformfähigkeit und einer für die Herstellung dreiteiliger Dosen notwendigen Schweißbarkeit des Materials sowie andererseits eine möglichst hohe Isotropie der Materialeigenschaften in Bezug auf Festigkeit und Umformfähigkeit im gealterten Zustand des Materials aufweisen.

Die genannten Aufgaben werden gemäß der Erfindung mit einem Stahlflachprodukt mit den Merkmalen des Anspruchs 1 gelöst. Unter einem Stahlflachprodukt wird dabei ein tafel- oder bandförmiges Stahlblech mit einer Dicke im Feinstblechbereich, insbesondere im Dickenbereich von 0,14 mm bis 0,49 mm, verstanden.

Die Erfindung geht von der Erkenntnis aus, dass die Mischkristallverfestigung mittels interstitiell eingelagerter Legierungsbestandteile des Stahls eine gleichzeitige Verbesserung von Festigkeit, Umformfähigkeit und Isotropie ermöglicht und dass sich eine Mischkristallverfestigung durch Kohlenstoff und Stickstoff dabei als besonders effektiv erweist, vorausgesetzt eine Abbindung des Kohlenstoffs und Stickstoffs zu Karbiden und Nitriden kann prozesstechnisch zumindest weitgehend unterdrückt werden. Die Ausbildung von Karbiden und Nitriden würde die Ausbildung anisotroper Eigenschaften fördern.

Eine weitere, der Erfindung zugrundeliegende Erkenntnis ist dabei, dass das Einbringen von Stickstoff durch Aufstickung eines kaltgewalzten Stahlflachprodukts in einem Glühofen unter Anwesenheit eines Stickstoffdonors, zum Ende der Herstellungsroute von Verpackungsstahl, in besonderem Maße geeignet ist, um sowohl eine effektive Mischkristallverfestigung durch Stickstoff zu realisieren als auch die Isotropie der für die Weiterverarbeitung des Stahlflachprodukts bei der Herstellung von Verpackungen relevanten Materialeigenschaften, insbesondere die Zugfestigkeit bzw. die Dehngrenze, die Bruchdehnung sowie die Erichschsentiefung (d.h. den Erichschsenindex), zu verbessern. Es hat sich nämlich gezeigt, dass das Aufsticken in einem Glühofen, anders als die Erhöhung des Stickstoffgehalts durch Einbringen von Stickstoff in die Stahlschmelze, im Wesentlichen zu einer interstitiellen und homogenen Einlagerung von Stickstoff ohne das Abbinden des Stickstoffs zu Nitriden führt.

Es wurde dabei in überraschender Weise festgestellt, dass sich der beim Aufsticken im Glühofen (insbesondere in einem Durchlaufglühofen vor oder während des Rekristallisationsglühens) in dem kaltgewalzten Stahlflachprodukt interstitiell eingelagerte Stickstoff positiv auf die Umformfähigkeit und die Isotropie der Materialeigenschaften auswirkt und dass trotz des vergleichsweise hohen Kohlenstoffanteils eine hohe Erichsentiefung erzielt werden kann. Die interstitielle Einlagerung von Stickstoff bewirkt offenbar aufgrund einer gleichmäßigen Verteilung des Stickstoffs im (Ferrit-)Gitter des Stahls eine herausragende Isotropie der mechanischen Eigenschaften des Stahlflachprodukts und dadurch bedingt ein hohes Umformvermögen, welches sich in einem hohen Wert der Erichsentiefung des unbeschichteten Stahlblechs niederschlägt. Insbesondere liegt die Erichsentiefung bei einer Dicke des Stahlblechs im Bereich von 0,14 bis 0,25 mm bei mindestens 4,3 mm und bei einer Dicke des Stahlblechs im Bereich von 0,26 bis 0,49 mm bei mindestens 5,3 mm. Weiterhin wird beim Aufsticken im Glühofen die Zugfestigkeit aufgrund einer Mischkristallverfestigung durch das Einlagern von freiem (d.h. ungebundenem) Stickstoff sowie aufgrund der Homogenität der Stickstoffverteilung im Stahlflachprodukt der Erichsenindex erhöht.

Hierzu trägt ferner bei, dass bei der interstitiellen Einlagerung von Stickstoff, im Vergleich zu Kohlenstoff, die Lage des peritektischen Punktes zu höheren Legierungsgehalten verschoben wird und deshalb eine Einlagerung von großen Mengen an Stickstoff auf Zwischengitterplätzen des Stahlgitters in Bezug auf die Oberflächenqualität und die Gefahr von Brammenrissen wesentlich unkritischer ist als bei Kohlenstoff. Um Brammenrisse zu vermeiden wird der Gewichtsanteil des Kohlenstoffs in dem erfindungsgemäßen Stahlflachprodukt bevorzugt auf 0,10 % begrenzt. Für die Einlagerung von Stickstoff besteht dagegen nur in Bezug auf die Grenze der Löslichkeit von Stickstoff im Ferrit-Gitter des Stahls sowie die Wirtschaftlichkeit des Herstellungsverfahrens eine Begrenzung des Stickstoffgehalts, welche unter Berücksichtigung der Löslichkeitsgrenze von Stickstoff im Ferritgitter von ca. 0,1 Gew. % und einer teilweisen Abbindung des Stickstoffs in Nitriden bei Anwesenheit starker Nitridbildner wie Al, Ti, Nb und/oder B, im Stahl bei maximal 0,120 Gew.% liegt. Aus prozesstechnologischer Sicht liegt der Stickstoffgehalt des aufgestickten Stahlflachprodukts der Erfindung bevorzugt bei höchstens 0,070 Gew. %, da eine darüber hinaus gehende Aufstickung des kaltgewalzten Stahlflachprodukts im (Durchlauf-)glühofen nur unter sehr hohem technologischen Aufwand realisierbar ist, der sich jedenfalls aktuell wirtschaftlich nicht rechnet. Aus prozesstechnologischen und wirtschaftlichen Gründen liegt der auf das Gewicht bezogene Anteil des Stickstoffs daher besonders bevorzugt bei 0,050 % oder weniger.

Besonders vorteilhaft ist es dabei, den Stickstoff erst möglichst spät im Verlauf des Herstellungsprozesses dem Stahlflachprodukt hinzuzufügen, um zu verhindern, dass sich nach dem Aufsticken, insbesondere durch Kaltwalzvorgänge entlang einer Walzrichtung unterschiedliche Materialeigenschaften in und quer zur Walzrichtung ausbilden können. Die Aufstickung des erfindungsgemäßen Stahlflachprodukts kann beispielsweise nach dem (primären) Kaltwalzen vor oder während des Glühens in einem Durchlaufglühofen erfolgen.

Dadurch, dass das Aufsticken erst nach dem (primären) Kaltwalzen erfolgt, ist der Stickstoff nicht Teil der Verarbeitungsschritte Warmwalzen und (primäres) Kaltwalzen, welche eine massive Anisotropie der Materialeigenschaften hervorrufen. Eine interstitielle Einlagerung des Stickstoffs im Eisengitter (Ferritgitter) während oder nach dem Rekristallisationsglühen fördert zusätzlich die Homogenität des Verpackungsstahls gemäß der Erfindung. Es besteht dabei insbesondere nicht die Gefahr einer Nitridausscheidung, welche während des Nachwalzens eine Richtungsabhängigkeit der Materialeigenschaften verstärken würde.

Aufgrund einer höheren Grundfestigkeit des Stahls, die durch eine Mischkristallverfestigung durch den interstitiell eingelagerten Stickstoff erzielt wird, kann der Nachwalzgrad beim zweiten Kaltwalzen reduziert und damit auch die dadurch verursachte Anisotropie minimiert werden. Der Nachwalzgrad beim zweiten Kaltwalzen kann damit bevorzugt auf 20 % oder weniger beschränkt werden und liegt insbesondere zwischen 7 % und 16 %.

Das Stahlflachprodukt entsprechend der Erfindung ist im Anspruch 1 definiert. Bevorzugte Ausführungsformen sind in den abhängigen Ansprüchen 2-14 definiert.

Die Erichsentiefung (ET) stellt dabei ein Maß für das Umformvermögen des Stahlblechs dar. Die Erichsentiefung hängt dabei von der Dicke des Stahlblechs ab, da sie im Tiefungsversuch nach Erichsen bei starker Ausdünnung ermittelt wird. Je höher die Blechdicke (d), desto mehr Material steht zum Fließen zur Verfügung und desto höher ist die Erichsentiefung. Die Erichsentiefung liegt bei den unbeschichteten Stahlblechen gemäß der Erfindung bei einer Dicke des Stahlblechs im Bereich von 0,14 bis 0,25 mm bei mindestens 4,3 mm und bei einer Dicke des Stahlblechs im Bereich von 0,26 bis 0,49 mm bei mindestens 5,3 mm. Um eine Erichsentiefung von mindestens 4,3 mm bei gleichzeitig hohen Zugfestigkeiten von mindestens 600 MPa zu erhalten, beträgt die Dicke des Stahlblechs bevorzugt mehr als 0,14 mm. Stahlbleche mit einer Dicke von 0,14 bis 0,28 mm werden bspw. für die Herstellung von Vollaufreißdeckeln für Dosen ("easy open ends, EOE) eingesetzt.

Die Erichsentiefung hängt auch von der Festigkeit (Rm) des Stahlblechs ab, da die Festigkeit durch eine erhöhte Kaltverformung gesteigert wird, welche für eine Absenkung des Umformvermögens sorgt. Eine höhere Festigkeit bewirkt daher eine niedrigere Erichsentiefung. Ferner hängt die Erichsentiefung von der Summe des Kohlenstoffanteils und des Stickstoffanteils des Stahlblechs ab (C + N). Wenn der Stickstoffanteil mindestens 0,014 Gew.% beträgt, sorgen die von Kohlenstoff und Stickstoff zur Verfügung gestellten Zwischengitteratome für eine örtlich gleichmäßigere Bewegung der Versetzungen. Diese Versetzungen konzentrieren sich nicht an einer bestimmten Stelle und verzögern dadurch die Entstehung einer lokalen Ausdünnung und dadurch die Rissbildung, weshalb die Erichsentiefung linear mit der Summe des Kohlenstoffanteils und des Stickstoffanteils ansteigt. Stickstoff und Kohlenstoff wirken also einerseits verfestigend und bewirken andererseits eine Vergleichmäßigung der mechanischen Eigenschaften. Die Summe des auf das Gewicht bezogenen Kohlenstoffanteils und des Stickstoffanteils des Stahlblechs liegt daher in dem erfindungsgemäßen Stahlflachprodukt bei mindestens 0,050 %. Dabei liegen die C- und N-Atome mit einem möglichst hohen Anteil in gelöster Form als Zwischengitteratome in dem Gitter des Stahls vor.

Das Stahlflachprodukt gemäß der Erfindung zeichnet sich daher durch eine hohe, in Walzrichtung erfasste Zugfestigkeit (Rm) von mindestens 600 MPa und gleichzeitig durch ein gutes und homogenes Umformvermögen aus. Darüber hinaus weist das Stahlflachprodukt gemäß der Erfindung eine gute Bruchdehnung (A) von bevorzugt mehr als 5% in Walzrichtung auf.

Die Dicke des Stahlblechs ist dabei bevorzugt größer als 0,14 mm und liegt insbesondere im Bereich von 0,18 mm bis 0,49 mm. Bevorzugt sind Dicken von weniger als 0,35 mm. Dies ermöglicht eine ressourcenschonende Herstellung von Verpackungen aus möglichst dünnen, jedoch für die dabei verwendeten Umformverfahren ausreichend stabilen Stahlblechen.

Zur Erhöhung der Korrosionsbeständigkeit kann das Stahlflachprodukt eine insbesondere elektrolytisch aufgebrachte metallische Beschichtung, insbesondere aus Zinn und/oder aus Chrom-/Chromoxid aufweisen. Statt der oder ergänzend zur metallischen Beschichtung kann das Stahlblech eine organische Beschichtung, insbesondere eine Polymerbeschichtung aus einem thermoplastischen Kunststoff oder eine Lackierung, aufweisen. Insbesondere kann die organische Beschichtung eine Polymerbeschichtung oder eine Polymerfolie aus einem thermoplastischen Kunststoff wie ein Polyester, insbesondere Polyethylentherephthalat (PET), oder aus Polyethylen (PE) oder Polypropylen (PP) oder einer Mischung davon sein. Die organische Beschichtung kann auch einen Lack, insbesondere einen BPA-NI-Lack oder einen wasserlöslichen Lack umfassen. Bevorzugt weist die organische Beschichtung eine Beschichtungsdicke von 5 bis 100 $\mu$m auf. Eine solche organische Beschichtung verbessert die Korrosionsbeständigkeit des Stahlflachprodukts erheblich, ohne die Umformeigenschaften zu verschlechtern. Die organische Beschichtung kann dabei ein- oder zweiseitig auf dem Stahlblech aufgebracht sein. Bei einer nur einseitig aufgebrachten Beschichtung wird die beschichtete Seite des Stahlflachprodukts zweckmäßig als Innenseite eines daraus herzustellenden Verpackungsbehälters, bspw. einer Dose, verwendet.

Eine organische Beschichtung auf einer oder beiden Oberflächen des Stahlflachprodukts verbessert dabei auch das Umformvermögen und erhöht deshalb die Erichsentiefung (Erichsenindex). Die Erichsentiefung (ET) des mit einer organischen Beschichtung beschichteten Stahlflachprodukts gemäß der Erfindung ist dabei bspw. um mindestens 0,1 mm größer ist als die Erichsentiefung des unbeschichteten Stahlblechs.

Das erfindungsgemäße Stahlflachprodukt ist wie folgt aus einem Stahl mit folgender, auf das Gewicht bezogenen Zusammensetzung herstellbar:

- C: mehr als 0,04 % und weniger als 0,10 %,
- Si: weniger als 0,10 %,
- Mn: 0,10 - 0,60 %
- P: weniger als 0,10 %,
- S: weniger als 0,03 %,
- Al: weniger als 0,05 %, bevorzugt weniger als 0,018 %,
- N: weniger als 0,014 %,
- Rest Eisen und unvermeidbare Verunreinigungen,

wobei eine aus dem schmelzflüssigen Stahl gegossene Stahlbramme bei einer Vorwärmtemperatur von mindestens 1200°C bis zu einer Endwalztemperatur von höchstens 900°C und insbesondere zwischen 800°C und 900°C zur Erzeugung eines Warmbands warmgewalzt wird, das Warmband bei einer Aufwickeltemperatur von 670°C oder weniger, bevorzugt von 590°C oder weniger zu einer Rolle (Coil) aufgewickelt und nach Erkalten auf Raumtemperatur, bevorzugt nach einer Beizung und Entfettung, mit einem Kaltwalzgrad von mindestens 80 % zur Erzeugung eines kaltgewalzten Stahlblechs (primär) kaltgewalzt und danach in einem Glühofen, insbesondere in einem Durchlaufglühofen rekristallisierend bei einer Glühtemperatur zwischen der Rekristallisationstemperatur des Stahls und 700°C, bevorzugt bei weniger als 670°C und insbesondere zwischen 600°C und 670°C geglüht und abschließend mit einem Nachwalzgrad zwischen 7 % und 20 % nachgewalzt wird, wobei zur Erhöhung des Stickstoffanteils auf mehr als 0,014 Gew. % und bevorzugt auf mehr als 0,015 Gew. % ein Aufsticken des Stahlblechs in dem Glühofen, wobei das Aufsticken vor, während oder nach dem rekristallisierenden Glühen erfolgen kann.

Das Aufsticken des Stahlblechs im Glühofen erfolgt bspw. durch die zumindest zeitweilige Anwesenheit eines Stickstoffdonors, der insbesondere durch eine ammoniakhaltige Gasatmosphäre im Glühofen gebildet wird. Dabei bildet sich aus dem Ammoniakgas bei den hohen Temperaturen im Glühofen atomarer Stickstoff, der als Stickstoffdonor wirkt, an der Oberfläche des Stahlblechs durch einen katalytischen Effekt und kann von dort aus in das Stahlblech diffundieren und dadurch den Stickstoffgehalt des Stahlblechs anreichern.

Während des Glühens im Glühofen bei Glühtemperaturen, die bevorzugt bei mehr als 630°C (Temperatur des Stahlflachprodukts) liegen um eine vollständige Rekristallisation sicher zu stellen, diffundiert der Stickstoff in das kaltgewalzte Stahlflachprodukt. Dadurch erfolgt eine gleichmäßige Verteilung und Einlagerung des eindiffundierten Stickstoffs im Gitter des Stahls. Durch die gleichmäßige Verteilung des interstitiell eingelagerten Stickstoffs ergibt sich eine hohe Isotropie der durch das Aufsticken beeinflussten mechanischen Eigenschaften des aufgestickten Stahlflachprodukts, insbesondere bezüglich der Bruchdehnung, der Zugfestigkeit und der Dehngrenze sowie der Erichsentiefung.

Eine gleichmäßige Verteilung des beim Aufsticken im Glühofen eingebrachten Stickstoffs über den Querschnitt das Stahlblechs lässt sich erzielen, wenn der Stickstoffdonor, bspw. Ammoniakgas, nicht nur gleichmäßig in dem Glühofen verteilt sondern zusätzlich noch auf die Oberflächen des Stahlblechs gerichtet wird, bspw. durch Aufsprühen mittels Sprühdüsen.

Eine möglichst homogene Verteilung des im Glühofen eingelagerten Stickstoffs ergibt sich ferner bei längeren Verweilzeiten des Stahlflachprodukts im Glühofen und insbesondere bei längeren Glühzeiten für das Rekristallisationsglühen. Bevorzugt liegen die Verweilzeiten des Stahlflachprodukts im Glühofen deshalb bei mehr als 10 Sekunden, besonders bevorzugt mehr als 30 Sekunden und insbesondere im Bereich von 30 Sekunden bis 250 Sekunden, bspw. im Bereich von 100 bis 180 Sekunden. Diese Glühbedingungen gewährleisten, dass sich ein möglichst hoher Anteil der beim Aufsticken eindiffundierten N-Atome und auch der bereits in der Stahlschmelze enthaltenen C-Atome auf Zwischengitterplätzen in dem Gitter des Stahls einlagern und der im Stahlblech vorhandene Stickstoff somit in möglichst hohem Maß in gelöster Form vorliegt.

Bei Verweilzeiten von mehr als 400 Sekunden wäre in einem Durchlaufglühofen bei einer typischen Länge der Durchlaufstrecke die Durchlaufgeschwindigkeit des bandförmigen Stahlflachprodukts so niedrig zu wählen, dass die Effizienz des Verfahrens aus wirtschaftlichen Gründen nicht mehr darstellbar ist, weshalb längere Glühzeiten als 400 Sekunden allenfalls in einem Haubenglühverfahren eingestellt werden können.

Nach dem Glühen wird das kaltgewalzte Stahlblech bevorzugt mit einer Kühlrate von 2 K/s bis 25 K/s, besonders bevorzugt zwischen 5 K/s und 20 K/s, abgekühlt. Bei einer langsameren Kühlung, d.h. bei Kühlraten von weniger als 2 K/s, würde ein Teil des beim Aufsticken eingelagerten Stickstoffs aufgrund einer Ausscheidung zu Nitridpartikeln seine festigkeitssteigernde und homogenisierende Wirkung auf die mechanischen Eigenschaften verlieren. Bei einer schnelleren Kühlung mit Kühlraten von mehr als 25 K/s können Verspannungen im Stahl entstehen, welche Anisotropien der mechanischen Eigenschaften und Unebenheiten im Stahlblech hervorrufen.

Die beim erfindungsgemäßen Stahlflachprodukt durch das Aufsticken nach dem Kaltwalzen erzielte Isotropie der für Kaltumformungen relevanten Materialeigenschaften, wie die Zugfestigkeit und die Dehngrenze sowie die Bruchdehnung und die Erichsentiefung, kann trotz einer durch das (zweifache) Kaltwalzen nicht vermeidbaren Kornstreckung der Stahlkörner erreicht werden. Die Körner des Stahlgefüges weisen bei dem erfindungsgemäßen Stahlflachprodukt bevorzugt eine mittlere Sehnenlänge von 3,0 bis 6,0 $\mu$m sowie eine richtungsabhängige Kornstreckung (S) auf, welche bspw. in Walzrichtung (0°) in Längsschnitten des Stahlflachprodukts bei mindestens 1,4 und in Planarschnitten des Stahlflachprodukts bei mindestens 1,1 liegt. Daraus ergibt sich also, dass beim erfindungsgemäßen Stahlflachprodukt trotz einer fertigungsbedingt vorhandenen Kornstreckung homogene, möglichst richtungsunabhängige Eigenschaften bezüglich der Zugfestigkeit, der Dehngrenze und der Bruchdehnung und der Erichsentiefung in der Blechebene und dadurch isotrope Umformeigenschaften erzielt werden können.

Die Feinheit der Körner des Stahlgefüges kann durch die Kühl- und Temperaturbedingungen nach dem Warmwalzen bis zum Aufwickeln beeinflusst werden. Besonders feine Körner lassen sich erzielen, wenn das Warmband von der Endwalztemperatur bis auf die Aufwickeltemperatur (Haspeltemperatur) mit einer Kühlrate von mindestens 15 K/s abgekühlt wird. Die sich dadurch einstellende Kornfeinung verbessert die Isotropie der mechanischen Eigenschaften des Stahlblechs in der Blechebene. Eine gleichmäßige Korngröße, d.h. eine geringe Halbwertsbreite der Korngrößenverteilung, welche ebenfalls zu einer Verbesserung der Isotropie der mechanischen Eigenschaften des Stahlblechs in der Blechebene beiträgt, lässt sich erzielen, wenn die Aufwickeltemperatur mindestens 500°C beträgt.

Da die durch das Aufsticken des Stahlflachprodukts erzeugte Mischkristallverfestigung am effizientesten ist, wenn der eingebrachte Stickstoff interstitiell in Zwischengitterplätzen des Stahls (insbesondere des Ferritgitters) eingelagert wird, ist es zweckmäßig wenn die Legierungskomposition des Stahls möglichst wenig starke Nitridbildner wie Al, Ti, B, und/oder Nb aufweist, um zu verhindern, dass der Stickstoff in Form von Nitriden gebunden wird. Daher weist die Legierungskomposition des Stahls bevorzugt folgende Obergrenzen für den Gewichtsanteil dieser stark nitridbildenden Legierungsbestandteile auf:

- Al: < 0,05 %, bevorzugt weniger als 0,018 %;
- Ti: < 0,01 %, bevorzugt weniger als 0,002%;
- B: < 0,005 %, bevorzugt weniger als 0,001%;
- Nb: < 0,01 %, bevorzugt weniger als 0,002%;

Bevorzugt beträgt der gesamte Gewichtsanteil der Nitridbildner weniger als 0,05 %. Dadurch kann insbesondere ein Gewichtsanteil des ungebundenen Stickstoffs von mehr 0,01 % erzeugt werden.

Das Stahlblech der erfindungsgemäßen Stahlflachprodukte kann neben den oben bereits aufgeführten Legierungsbestandteilen und den genannten Höchstmengen der Nitridbildner optional noch folgende weitere Elemente enthalten, die bei der Herstellung der Stahlschmelze insbesondere durch die Zugabe von Schrott beigefügt werden können:

- Cr: weniger als 0,1 %, bevorzugt 0,01 - 0,05%,
- Ni: weniger als 0,1 %, bevorzugt 0,01 - 0,05 %,
- Cu: weniger als 0,1 %, bevorzugt 0,002 - 0,05 %,
- Mo: weniger als 0,02 %,
- Sn: weniger als 0,03 %.

Der Gewichtsanteil des ungebunden Stickstoffs im Warmband $N_{frei}$ (Warmband) kann über folgende *Formel 2* beschrieben werden, wobei angenommen wird, dass die ggf. innerhalb obiger Grenzen im Stahl vorhanden Nitridbildnder Al, Ti, B, und Nb vollständig mit Stickstoff zu Nitriden abgebunden werden:

$$N_{frei} \text{ (Warmband)} = \tfrac{1}{2}(N_0 - Ti / 3,4 - B / 0,8 - Nb / 6,6 - Al\text{-}Faktor + |N_0 - Ti / 3,4 - B / 0,8 - Nb / 6,6 - Al\text{-}Faktor|) \qquad \text{(Formel 2)},$$

wobei $N_0$ der Gewichtsanteil des Stickstoffs in der Schmelze des Stahls ist, der Al-Faktor in Abhängigkeit der Haspeltemperatur HT (Aufwickeltemperatur des Warmbands) und des Aluminiumgehalts Al (in Gew. %) wie folgt definiert ist:

- wenn HT < 640 °C: Al-Faktor = 0;
- wenn 750 ≥ HT ≥ 640 °C: Al-Faktor = $N_0 - N_0$ x (-0,682 HT + 536) / 100 = $N_0$ x (1 - (-0,682 HT + 536)/100);

und der Summand

$$| N_0 - Ti / 3,4 - B / 0,8 - Nb / 6,6 - Al\text{-}Faktor |$$

als der Betrag der Differenz "$N_0$ - Ti / 3,4 - B / 0,8 - Nb / 6,6 - Al-Faktor" definiert ist. In Formel 2 wird durch diesen Betrags-Summanden berücksichtigt, dass maximal nur der gesamte im Warmband (d.h. in der Stahlschmelze) tatsächlich vorhandene Stickstoff durch die im Warmband (d.h. in der Stahlschmelze) vorhandenen Nitridbildner abgebunden werden kann.

Der gesamte Gewichtsanteil des freien Stickstoffs im kaltgewalzten Stahlflachprodukt ergibt sich aus der Summe des freien Stickstoffgehalts im Warmband ($N_{frei}$ (Warmband) gemäß obiger Formel 2) und des durch die Aufstickung im Durchlaufglühofen hinzugefügten Stickstoffs $\Delta N$:

$$N_{frei} = N_{frei} (\text{Warmband}) + \Delta N \qquad\qquad (\text{Formel 3})$$

Dabei wird davon ausgegangen, dass der beim Aufsticken im Durchlaufglühofen eingebrachte Stickstoffanteil $\Delta N$ zumindest im Wesentlichen interstitiell in Zwischengitterplätze eingelagert wird. Die Obergrenze für den Gewichtsanteil des freien Stickstoffs im kaltgewalzten Stahlflachprodukt wird dabei durch die Löslichkeitsgrenze von Stickstoff im Ferritgitter des Stahls bestimmt, die bei ca. 0,1 Gew. % liegt.

Der gesamte Gewichtsanteil des freien Stickstoffs im kaltgewalzten Stahlflachprodukt ($N_{frei}$) liegt bevorzugt bei mehr als 0,01 %. Um einen möglichst hohen Anteil des Stickstoffs in ungebundener Form in das kaltgewalzte Stahlflachprodukt einzubringen, wird bevorzugt der Großteil des gesamten Gewichtsanteils des Stickstoffs durch das Aufsticken im Durchlaufglühofen eingebracht, wobei der Gewichtsanteil von $\Delta N$ bevorzugt bei mindestens 0,002 Gew. % und besonders bevorzugt bei mehr als 0,008 Gew. % liegt.

Das Aufsticken des Stahlflachprodukts im Durchlaufglühofen kann dabei vor, während oder nach dem rekristallisierenden Glühen erfolgen. So ist es bspw. möglich, das Aufsticken in dem Durchlaufglühofen in einer ersten Zone des Durchlaufglühofens bei einer ersten Temperatur unterhalb der Rekristallisationstemperatur unter Anwesenheit eines Stickstoffdonors durchzuführen und das Stahlflachprodukt danach in einer in Bandlaufrichtung nachfolgenden zweiten Zone des Durchlaufglühofens zum rekristallisierenden Glühen auf eine zweite Temperatur oberhalb der Rekristallisationstemperatur zu erwärmen. Diese Reihenfolge des Aufstickens und rekristallisierenden Glühens kann auch umgekehrt werden. Eine solche Entkopplung des Aufstickens und des rekristallisierenden Glühens in verschiedenen Zonen des Durchlaufglühofens hat den Vorteil, dass für den jeweiligen Prozess die optimale Temperatur eingestellt werden kann, wobei die optimale Temperatur für das Aufsticken niedriger liegt als für das rekristallisierende Glühen. Aus ökonomischen Gründen ist jedoch ein gleichzeitiges Aufsticken und Glühen des Stahlflachprodukts im Durchlaufglühofen bei einer Temperatur oberhalb der Rekristallisationstemperatur unter Anwesenheit eines Stickstoffdonors zu bevorzugen.

Bevorzugt weist das Warmband bereits einen anfänglichen Stickstoffanteil $N_0$ im Bereich von 0,001 Gew. % bis maximal 0,014 Gew. % auf, um den gesamten Stickstoffgehalt im kaltgewalzten Stahlflachprodukt und dadurch die durch das Aufsticken des Kaltbands bewirkte Mischkristallverfestigung zu maximieren. Um die Ausbildung von Brammenrissen beim Gießen der Bramme und beim Warmwalzen zu verhindern und um nicht bereits die Festigkeit des Warmbands soweit zu erhöhen, dass es mit den üblichen Kaltwalzvorrichtungen nicht mehr kaltwalzbar ist, sollte der Gewichtsanteil des Stickstoffs in der Stahlschmelze, aus der das Warmband hergestellt wird, 0,014 % nicht überschreiten. Der gesamte Stickstoffgehalt des erfindungsgemäßen Stahlflachprodukts, der sich aus der Summe des anfänglichen Stickstoffanteil $N_0$ und dem beim Aufsticken im Glühofen eingebrachten Stickstoffanteil $\Delta N$ zusammensetzt, wird beim Glühen des kaltgewalzten Stahlflachprodukts durch die Anwesenheit des Stickstoffdonors in dem Glühofen eingestellt, indem bei den Glühtemperaturen dissoziierter, atomarer Stickstoff des Stickstoffdonors in das kaltgewalzte Stahlflachprodukt diffundiert und dadurch den Stickstoffanteil um $\Delta N$ erhöht. Der beim Aufsticken im Glühofen eingebrachte Stickstoffanteil $\Delta N$ liegt dabei bevorzugt bei mindestens 0,002 Gew. %, wobei dadurch der gesamte Stickstoffanteil des Stahlflachprodukts auf mehr als 0,014 Gew.% erhöht wird, wenn der anfängliche Stickstoffanteil $N_0$ in der Stahlschmelze niedriger als dieser Wert war. Besonders bevorzugt wird das kaltgewalzte Stahlflachprodukt im Durchlaufglühofen auf mehr als 0,020 Gew. % Stickstoffanteil aufgestickt. Der gesamte Stickstoffgehalt des im Durchlaufglühofen aufgestickten Stahlflachprodukts kann (zumindest theoretisch) bis zur Löslichkeitsgrenze des Stickstoffs im (Ferrit-)Gitter des Stahls von ca. 0,1 Gew. % reichen.

Bei dem Stickstoffdonor kann es sich bspw. um eine stickstoffhaltige Gasatmosphäre im Glühofen, insbesondere um eine ammoniakhaltige Atmosphäre, oder um eine stickstoffhaltige Flüssigkeit handeln, die auf die Oberfläche des kaltgewalzten Stahlflachprodukts aufgebracht wird, bevor dieses in dem Glühofen erwärmt wird. Der Stickstoffdonor sollte dabei so ausgebildet sein, dass durch Dissoziation atomarer Stickstoff im Glühofen bereitgestellt wird, der in das Stahlflachprodukt diffundieren kann. Insbesondere kann es sich bei dem Stickstoffdonor um Ammoniakgas handeln. Damit dieses im Glühofen zur Bildung von atomarem Stickstoff dissoziiert, werden im Glühofen beim Aufsticken des kaltgewalzten Stahlflachprodukts bevorzugt Ofen-Temperaturen von mehr als 400°C eingestellt.

Aufgrund der durch eine Mischkristallverfestigung herbeigeführten Festigkeitssteigerung durch das Aufsticken des Stahlflachprodukts beim Glühen in dem (Durchlauf-)glühofen in Anwesenheit des Stickstoffdonors ist bei dem erfindungsgemäßen Stahlflachprodukt kein Nachwalzen mit einem hohen Nachwalzgrad erforderlich, um zusätzlich die Festigkeit noch durch eine Kaltverfestigung zu steigern. Der Nachwalzgrad kann daher bevorzugt auf maximal 20% beschränkt werden, wodurch eine Verschlechterung der Isotropie der Materialeigenschaften durch ein zweites Kaltwalzen mit hohen Nachwalzgraden vermieden werden kann. Bevorzugt liegen die Nachwalzgrade bei weniger als 16 %.

Die Eigenschaften des so hergestellten Stahlflachprodukts stellen sich dabei nach einer Alterung des nachgewalzten Stahlbands ein, wobei die Alterung entweder künstlich durch Erwärmung auf 200°C über 20 Minuten oder durch eine Lackierung mit anschließender Lacktrocknung des Stahlflachprodukts herbeigeführt werden kann.

Nach dem zweiten Kaltwalzen (Nachwalzen) kann, zweckmäßig nach einer Entfettung der Oberfläche, zur Verbesserung der Korrosionsbeständigkeit auf die Oberfläche des Stahlflachprodukts ein- oder beidseitig eine Beschichtung aufgebracht werden, bspw. durch elektrolytische Abscheidung einer Zinnschicht und/oder einer Chrom-/Chromoxid-Schicht und/oder durch Lackierung mit einem organischen Lack, bspw. Polyester- oder Epoxyphenol-Lack, oder durch Auflaminieren einer Polymerfolie aus einem thermoplastischen Kunststoff, insbesondere einer Folie aus PET oder aus PP, PVC oder PE oder Mischungen davon. Bei Lacken liegen die bevorzugten Dicken im Bereich von 2 bis 15 $\mu$m pro Seite. Die Dicke von auflaminierten Polymerfolien liegt zweckmäßig im Bereich von 10 bis 25 $\mu$m. Organische Auflagen wie Lacke oder auflaminierte Polymerfolien erhöhen die Umformfähigkeit. So liegt die Erichsentiefe bei lackierten oder mit einer Polymerfolie beschichteten Stahlflachprodukten gemäß der Erfindung je nach Schichtdicke der Auflage um ca. 0,1 mm oder mehr höher als die Erichsentiefe der unbeschichteten Stahlbleche.

Die hervorragenden isotropen mechanischen Eigenschaften der erfindungsgemäßen Stahlbleche ermöglichen die Herstellung von Aufreißdeckeln von Dosen ("easy-open-ends" EOE) oder von Aerosoldosen bzw. Aerosoldosen-Komponenten, wie z.B. Aerosoldosen-Böden oder -Deckel, mit isotropen Eigenschaften über die gesamte Fläche der Aufreißdeckel bzw. der Aerosoldosen und deren Komponenten. Insbesondere bei runden oder ovalen Aufreißdeckeln sowie runden Aerosoldosen-Böden oder Deckel erweisen sich die isotropen Eigenschaften der erfindungsgemäßen Stahlbleche als vorteilhaft, da über den gesamten Umfang des jeweiligen Produkts nahezu gleichbleibende mechanische Eigenschaften vorhanden sind. Auch bei Tiefziehanwendungen, in denen ein rundes Blechteil (Ronde) umgeformt wird, um bspw. einen Dosenrumpf für eine zweiteilige Dose zu erzeugen, erweisen sich die isotropen mechanischen Eigenschaften der erfindungsgemäßen Stahlbleche als vorteilhaft, da auch hier gleichbleibende mechanische Eigenschaften des umgeformten Blechteils um dessen Umfang erzielt werden können und beim Umformen keine ausgedünnten Stellen mit geringerer Blechdicke entstehen.

Diese und weitere Eigenschaften, Merkmale und Vorteile des erfindungsgemäßen Stahlflachprodukts ergeben sich aus den nachfolgend unter Bezugnahme auf die begleitenden Zeichnungen und Tabellen näher beschriebenen Ausführungsbeispielen. Die Zeichnungen zeigen:

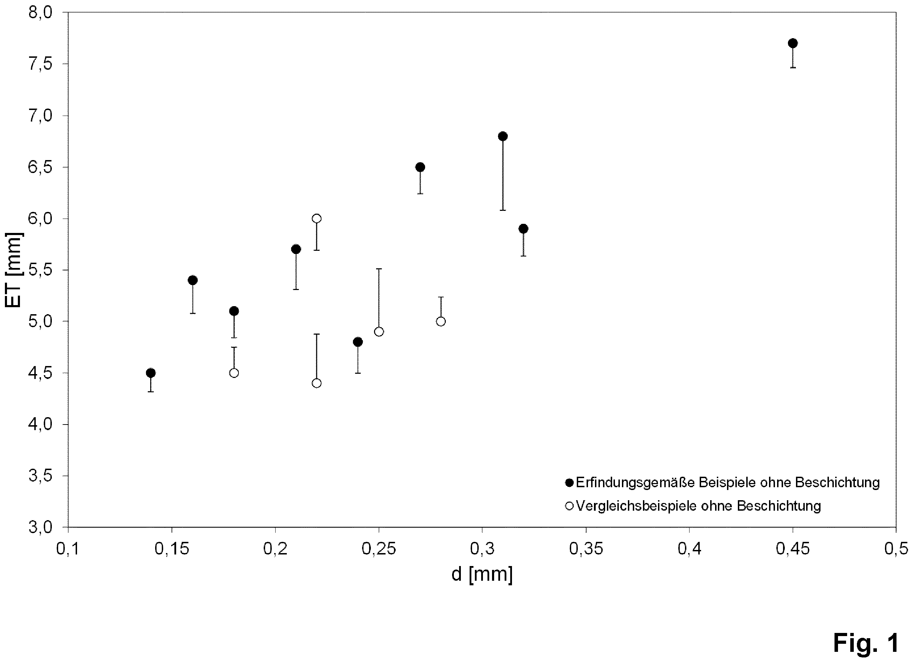

Fig. 1: ein Diagramm der an erfindungsgemäßen Stahlflachprodukten und nichterfindungsgemäßen Vergleichsproben von kaltgewalzten Stahlblechen gemessenen Werte der Erichsentiefe (ET in mm) aufgetragen über die Dicke der Stahlflachprodukte (d in mm), wobei die Punkte die an den Proben gemessenen Werte der Erichsentiefe darstellen und die mit einer Verbindungslinie jeweils damit verbunden Striche den rechnerisch gemäß Formel (1) berechneten Wert der Erichsentiefe darstellen, wobei eine Abweichung nach oben einen höheren errechneten Wert und eine Abweichung nach unten einen niedrigeren errechneten Wert im Vergleich zum Messwert charakterisiert;

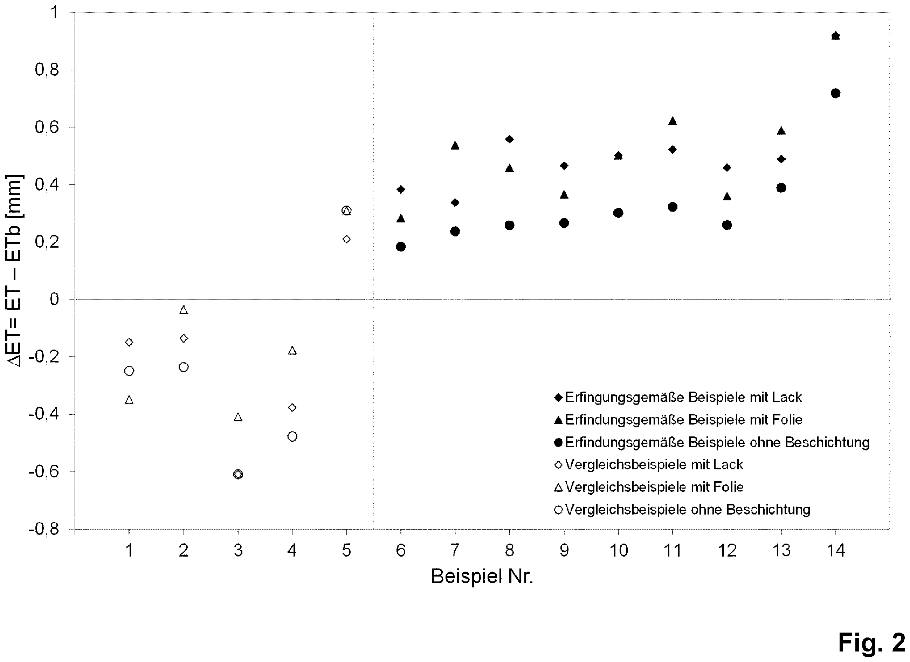

Fig. 2: ein Diagramm der Differenz ($\Delta$ET) zwischen den gemessenen Werten der Erichsentiefe (ET) und der aus Formel (1) berechneten Werte der Erichsentiefe (ETb), aufgetragen über die Nummer des jeweiligen Beispiels aus den Tabellen 1 bis 3;

Für die Herstellung erfindungsgemäßer Stahlflachprodukte wird aus einer Stahlschmelze eine Bramme gegossen und zu einem Warmband warmgewalzt. Die Legierungszusammensetzung der Stahlschmelze orientiert sich dabei zweckmäßig an den durch Normen für Verpackungsstahl vorgegebenen Grenzwerten (wie z.B. in der Norm ASTM A623-11 "Standard Specification for Tin Mill Products" oder im "European Standard EN 10202" definiert). Im Folgenden werden die Bestandteile des Stahls, aus dem erfindungsgemäße Stahlflachprodukte hergestellt werden können, im Einzelnen erläutert:

Zusammensetzung des Stahls:

- Kohlenstoff, C: mehr als 0.04% und weniger als 0.1% Kohlenstoff wirkt härte- bzw. festigkeitssteigernd. Daher enthält der Stahl mindestens mehr als 0,04 Gew. % Kohlenstoff. Um die Walzbarkeit des Stahlflachprodukts beim primären Kaltwalzen und ggf. in einem zweiten Kaltwalzschritt (Nachwalzen oder Dressieren) zu gewährleisten und die Bruchdehnung nicht zu senken, sollte der Kohlenstoffgehalt nicht zu hoch sein. Mit zunehmendem Kohlenstoffgehalt entsteht ferner während der Herstellung und der Verarbeitung des Stahlflachprodukts eine ausgeprägte Anisotropie in Form einer Zeiligkeit, da der Kohlenstoff aufgrund der niedrigen Löslichkeit im Ferritgitter des Stahls maßgeblich in Form von Zementit vorliegt. Darüber hinaus verschlechtert sich mit zunehmendem Kohlenstoffgehalt die Oberflächenqualität und die Gefahr von Brammenrissen steigt mit Annäherung an den peritektischen Punkt. Weiterhin wird mit zunehmendem Kohlenstoffgehalt das Umformverhalten des Stahls verschlechtert. Deshalb ist eine Begrenzung des Kohlenstoffgehalts auf weniger als 0,1 Gew. % notwendig, da nur so effektiv die Bildung von Brammenrissen und die daraus resultierende punktförmige Oxidation (Diffusion von Sauerstoff in Risse) sowie eine zu starke Reduzierung der Erichsentiefung vermieden werden können. Besonders bevorzugt liegt der Kohlenstoffgehalt im Bereich von 0,04 bis 0,085 Gew. %.
- Mangan, Mn: mindestens 0,10 % und höchstens 0,60 %;

Mangan wirkt ebenfalls härte- bzw. festigkeitssteigernd. Außerdem verbessert Mangan die Schweißbarkeit und den Verschleißwiderstand von Stahl. Ferner wird durch Zugabe von Mangan die Rotbruch-Neigung beim Warmwalzen gemindert, indem Schwefel zu weniger schädlichem MnS abgebunden wird. Weiterhin führt Mangan zu einer Kornfeinung und durch Mangan kann die Löslichkeit von Stickstoff im Eisengitter erhöht und eine Diffusion von Kohlenstoff an die Oberfläche der Bramme verhindert werden. Daher ist ein Mangangehalt von wenigstens 0,10 Gew.% zu bevorzugen. Zur Erzielung hoher Festigkeiten ist ein Mangangehalt von mehr als 0,2 Gew.%, insbesondere von 0,30 Gew.% oder mehr zu bevorzugen. Wenn der Mangangehalt jedoch zu hoch wird geht dies zu Lasten der Korrosionsbeständigkeit des Stahls und die Lebensmittelverträglichkeit ist nicht mehr gewährleistet. Außerdem wird bei zu hohen Mangangehalten die Festigkeit des Warmbands zu hoch, was dazu führt, dass das Warmband nicht mehr kaltwalzbar ist. Daher ist die Obergrenze für den Mangangehalt bei 0,60 Gew.%.

• Phosphor, P: weniger als 0,10 %

Phosphor ist ein unerwünschtes Begleitelement in Stählen. Ein hoher Phosphorgehalt führt insbesondere zu einer Versprödung des Stahls und verschlechtert daher die Umformfähigkeit von Stahlflachprodukten, weshalb die Obergrenze für den Phosphorgehalt bei 0,10 Gew. %, liegt. Bevorzugt beträgt der Phosphorgehalt 0,03 Gew. % oder weniger.

• Schwefel, S: mehr als 0,001 % und höchstens 0,03 %

Schwefel ist ein unerwünschtes Begleitelement, das die Dehnbarkeit und die Korrosionsbeständigkeit verschlechtert. Daher sollte nicht mehr als 0,03 Gew.% Schwefel im Stahl enthalten sein. Andererseits müssen für eine Entschwefelung von Stahl aufwändige und kostenintensive Maßnahmen ergriffen werden, weshalb aus wirtschaftlichen Gesichtspunkten ein Schwefelgehalt von weniger als 0,001 Gew.% nicht mehr vertretbar ist. Der Schwefelgehalt liegt daher bevorzugt im Bereich von 0,001 Gew.% bis 0,03 Gew.%, besonders bevorzugt zwischen 0,005 Gew.% und 0,01 Gew.%.

• Aluminium, Al: mehr als 0,002 % und weniger als 0,05 %

Aluminium wird bei der Stahlherstellung als Desoxidationsmittel zur Stahlberuhigung benötigt. Aluminium erhöht weiterhin die Zunderbeständigkeit und die Umformfähigkeit. Deshalb liegt der Aluminiumgehalt bevorzugt bei mehr als 0,002 Gew.%. Allerdings bildet Aluminium mit Stickstoff Aluminiumnitride, welche in den erfindungsgemäßen Stahlflachprodukten nachteilig sind, da sie den Anteil des freien Stickstoffs reduzieren. Außerdem können zu hohe Aluminiumkonzentrationen zu Oberflächendefekten in Form von Aluminiumclustern führen. Deshalb wird Aluminium in einer Konzentration von maximal 0,05 Gew.% eingesetzt. Bevorzugt liegt der Aluminiumgehalt bei weniger als 0,018 Gew. %, um einen möglichst hohen Anteil des ungebundenen, freien Stickstoffs ($N_{frei}$) zu gewährleisten.

- Silizium, Si: weniger als 0,10 %;

Silizium erhöht im Stahl die Zunderbeständigkeit und ist ein Mischkristallhärter. Bei der Stahlherstellung dient Si als Desoxidationsmittel. Ein weiterer positiver Einfluss von Silizium auf Stahl ist, dass es die Zugfestigkeit und die Streckgrenze erhöht. Daher ist ein Siliziumgehalt von 0,003 Gew.% oder mehr zu bevorzugen. Wenn der Siliziumgehalt jedoch zu hoch wird und insbesondere 0,10 Gew.% übersteigt, kann die Korrosionsbeständigkeit des Stahls verschlechtert werden und Oberflächenbehandlungen, insbesondere durch elektrolytische Beschichtungen, können erschwert werden. Bevorzugt liegt der Siliziumgehalt zwischen 0,005 Gew.% und 0,03 Gew. %.

- Optional: Stickstoff, $N_0$: weniger als 0,014 %, und bevorzugt mehr als 0,001 %

Stickstoff ist ein optionaler Bestandteil in der Stahlschmelze, aus dem der Stahl für die erfindungsgemäßen Stahlflachprodukte hergestellt wird. Zwar wirkt Stickstoff als Mischkristallverfestiger härte- und festigkeitssteigernd. Allerdings führt ein zu hoher Stickstoffgehalt in der Stahlschmelze von mehr als 0,014 Gew.% dazu, dass das aus der Stahlschmelze hergestellte Warmband schwieriger kaltwalzbar ist. Weiterhin erhöht ein hoher Stickstoffgehalt in der Stahlschmelze die Gefahr von Defekten im Warmband, da bei Stickstofkonzentrationen von 0,014 Gew.% oder mehr die Warmumformfähigkeit geringer wird. Gemäß der Erfindung ist vorgesehen, den Stickstoffgehalt des Stahlflachprodukts nachträglich durch Aufsticken des kaltgewalzten Stahlflachprodukts in einem Glühofen zu erhöhen. Deshalb kann auf das Einbringen von Stickstoff in die Stahlschmelze auch gänzlich verzichtet werden. Zur Erzielung einer hohen Mischkristallverfestigung ist es jedoch zu bevorzugen, wenn bereits in der Stahlschmelze ein anfänglicher Stickstoffgehalt von mehr als 0,001 Gew. %, besonders bevorzugt von 0,010 Gew. % oder mehr enthalten ist.

Zur Einbringung eines anfänglichen Stickstoffgehalts $N_0$ in das Stahlflachprodukt vor dem Aufsticken im Glühofen kann der Stahlschmelze Stickstoff in entsprechender Menge zugegeben werden, bspw. durch Einblasen von Stickstoffgas und/oder durch Zugabe einer festen Stickstoffverbindung wie Kalk-Stickstoff (Calcium Cyanamid) oder Mangannitrid.

- optional: Nitridbildner, insbesondere Niob, Titan, Bor, Molybdän, Chrom:

Nitridbildende Elemente wie Aluminium, Titan, Niob, Bor, Molybdän und Chrom sind im Stahl der erfindungsgemäßen Stahlflachprodukte von Nachteil, weil sie durch Nitridbildung den Anteil des freien Stickstoffs reduzieren. Außerdem sind diese Elemente teuer und erhöhen daher die Herstellkosten. Andererseits wirken bspw. die Elemente Niob, Titan und Bor über eine Kornfeinung als Mikrolegierungsbestandteile festigkeitssteigernd, ohne die Zähigkeit herabzusetzen. Deshalb können die genannten Nitridbildner vorteilhaft in gewissen Grenzen als Legierungsbestandteile der Stahlschmelze hinzugegeben werden. Der Stahl kann daher (optional) bezogen auf das Gewicht folgende nitridbildende Legierungsbestandteile enthalten:

- Titan, Ti: bevorzugt mehr als 0,002 %, aber aus Kostengründen weniger als 0,01 %,
- Bor, B: bevorzugt mehr als 0,001 %, aber aus Kostengründen weniger als 0,005 %, und/oder
- Niob, Nb: bevorzugt mehr als 0,001 %, aber aus Kostengründen weniger als 0,01 %, und/oder
- Chrom, Cr: bevorzugt mehr als 0,01 % um den Einsatz von Schrott bei der Herstellung der Stahlschmelze zu ermöglichen und die Diffusion von Kohlenstoff an der Oberfläche der Bramme zu erschweren, aber zur Vermeidung von Karbiden und Nitriden höchstens 0,1 %, und/oder
- Molybdän, Mo: weniger als 0,02 %, um eine zu starke Erhöhung der Rekristallisationstemperatur zu vermeiden;

Zur Vermeidung einer Herabsetzung des Anteils des freien, ungebundenen Stickstoffs $N_{frei}$ durch Nitridbildung ist der gesamte Gewichtsanteil der genannten Nitridbildner in der Stahlschmelze bevorzugt geringer als 0,05 %.

Weitere optionale Komponenten:

Neben dem Reststoff Eisen (Fe) und unvermeidlichen Verunreinigungen kann die Stahlschmelze noch weitere optionale Bestanteile enthalten, wie z.B.

- optional Kupfer, Cu: mehr als 0,002, um den Einsatz von Schrott bei der Herstellung der Stahlschmelze zu ermöglichen , aber weniger als 0,1 % um die Lebensmittelverträglichkeit zu gewährleisten;
- optional Nickel, Ni: mehr als 0,01, um den Einsatz von Schrott bei der Herstellung der Stahlschmelze zu ermöglichen und die Zähigkeit zu verbessern, aber weniger als 0,1 % um die Lebensmittelverträglichkeit zu gewährleisten, bevorzugt liegt der Nickelanteil zwischen 0,01 und 0,05 Gew. %;

- optional Zinn, Sn: bevorzugt weniger als 0,03 %;

Herstellungsverfahren des Stahlflachprodukts:

Mit der beschriebenen Zusammensetzung des Stahls wird eine Stahlschmelze erzeugt, welche zunächst stranggegossen und nach Abkühlung in Brammen zerteilt wird. Die Brammen werden anschließend wieder auf Vorwärmtemperaturen von mehr als 1100°C, insbesondere von 1200°C erwärmt und zur Erzeugung eines Warmbands mit einer Dicke im Bereich von 1 bis 4 mm warmgewalzt.

Die Endwalztemperatur beim Warmwalzen liegt bevorzugt oberhalb der Ar3-Temperatur, um austenitisch zu bleiben, und liegt bevorzugt unterhalb von 900°C, insbesondere zwischen 800°C und 900°C.

Das Warmband wird bei einer vorgegebenen und zweckmäßig konstanten Aufwickeltemperatur (Haspeltemperatur, HT) zu einer Rolle (Coil) aufgewickelt. Die Aufwickeltemperatur liegt dabei bevorzugt unterhalb Ar1, um im ferritischen Gebiet zu bleiben, insbesondere bei weniger als 670°C und bevorzugt unterhalb von 630°C, besonders bevorzugt bei weniger als 590°C und insbesondere im Bereich von 500°C bis 590°C, um das Ausfällen von AlN zu vermeiden. Aus wirtschaftlichen Gründen und zur Erzielung einer gleichmäßigen Korngröße sollte die Aufwickeltemperatur bei mehr als 500°C liegen. Eine Ausbildung von Eisennitriden an der Oberfläche des Warmbands kann durch eine Abkühlung des Warmbands nach Beendigung des Warmwalzens bis zum Aufwickeln bei höheren Kühlraten von mehr als 15 K/s vermieden werden.

Zur Herstellung eines Verpackungsstahls in Form eines dünnen Stahlflachprodukts im Dickenbereich von weniger als 0,5 mm (Feinstblechdicken) und bevorzugt mit einer Dicke im Bereich von 0,14 bis 0,35 mm wird das Warmband kaltgewalzt, wobei zweckmäßig eine Dickenreduktion (Reduktionsgrad bzw. Kaltwalzgrad) von mindestens 80% und bevorzugt im Bereich von 85% bis 95% erfolgt. Zur Wiederherstellung des beim Kaltwalzen zerstörten Kristallgefüges des Stahls wird das kaltgewalzte Stahlband anschließend rekristallisierend in einem Glühofen geglüht. Dies erfolgt bspw. durch Durchleiten des in Form eines kaltgewalzten Stahlbands vorliegenden Stahlflachprodukts durch einen Durchlaufglühofen, in dem das Stahlband auf Temperaturen oberhalb der Rekristallisationstemperatur des Stahls erhitzt wird. Dabei erfolgt vor oder bevorzugt gleichzeitig mit dem Rekristallisationsglühen oder nach einem vollständigen Rekristallisieren ein Aufsticken des kaltgewalzten Stahlflachprodukts durch ein Erwärmen des Stahlflachprodukts oder durch Halten einer geeigneten Aufsticktemperatur im Glühofen in Anwesenheit eines Stickstoffdonors. Das Aufsticken wird dabei bevorzugt gleichzeitig mit dem Rekristallisationsglühen in dem Glühofen durchgeführt, indem in den Glühofen ein Stickstoffdonor, insbesondere in Form eines stickstoffhaltigen Gases, bevorzugt Ammoniak ($NH_3$), eingebracht und das Stahlflachprodukt auf eine Glühtemperatur oberhalb der Rekristallisationstemperatur des Stahls erwärmt und für eine Haltezeit von bevorzugt 30 bis 180 Sekunden, bevorzugt im Bereich von 50 bis 150 Sekunden, auf der Glühtemperatur gehalten wird. Die Glühtemperatur liegt dabei bevorzugt zwischen der Rekristallisationstemperatur des Stahls und 700°C, bevorzugt oberhalb von 600°C, insbesondere zwischen 630°C und 670°C, bspw. im Bereich von 650°C bis 670°C. Der Stickstoffdonor wird dabei so ausgewählt, dass sich bei den Temperaturen im Glühofen durch Dissoziation des Stickstoffdonors atomarer Stickstoff bildet, der in das Stahlflachprodukt diffundieren kann. Hierfür hat sich Ammoniak als geeignet erwiesen. Um beim Glühen eine Oxidation der Oberfläche des Stahlflachprodukts zu vermeiden wird zweckmäßig in dem Glühofen eine Schutzgasatmospähre verwendet. Bevorzugt besteht die Atmosphäre in dem Glühofen aus einer Mischung des als Stickstoffdonor wirkenden stickstoffhaltigen Gas und einem Schutzgas wie HNx, wobei der Volumenanteil des Schutzgases bevorzugt zwischen 90% und 99,5% liegt und der Rest des Volumenanteils der Gasatmospähre von dem stickstoffhaltigen Gas, insbesondere Ammoniakgas ($NH_3$-Gas), gebildet wird.

Ausführungsbeispiele:

Nachfolgend werden Ausführungsbeispiele der Erfindung und Vergleichsbeispiele erläutert. Aus Stahlschmelzen mit der in **Tabelle** 1 aufgeführten Legierungskompositionen wurden durch Warmwalzen und nachfolgendem Kaltwalzen Stahlflachprodukte (Stahlbleche) hergestellt, wobei N0 den Stickstoffanteil in der Stahlschmelze angibt.

Die kaltgewalzten Stahlbleche wurden anschließend in einem Durchlaufglühofen rekristallisierend geglüht, indem die Stahlflachprodukte während einer Haltedauer von 38 bis 48 Sekunden auf Glühtemperaturen von 630 °C bis 673°C gehalten wurden. Bei den erfindungsgemäßen Stahlflachprodukten erfolgte vor oder während des Glühens im Durchlaufglühofen ein Aufsticken durch eine ammoniakhaltige Gasatmosphäre im Glühofen bestehend aus einem HNx-Schutzgas und Ammoniakgas mit einem Ammoniak-Gleichgewichtsgehalt von 0,5 bis 5,0 Vol. %.

Das als Stickstoffdonor wirkende Ammoniakgas wurde dabei zusätzlich mittels Sprühdüsen auf die Oberfläche der Stahlbleche gerichtet. Die dabei erzielte Konzentration des Stickstoffs in den aufgestickten Stahlblechen gemäß der Erfindung ist in Tabelle 1 mit N (in Gew. %) angegeben. Der gesamte Stickstoffgehalt N wurde dabei gern, der Norm DIN EN ISO 14284 (insbesondere Ziffer 4.4.1) ggf. nach der Entfernung einer oberflächlichen Eisennitridschicht erfasst, die sich bei manchen Proben beim Aufsticken an der Oberfläche der Proben gebildet hat. Der gesamte Gewichtsanteil des Stickstoffs setzt sich bei den erfindungsgemäßen Stahlflachprodukten aus dem anfänglichen Stickstoffgehalt der Stahlschmelze (N0) und dem durch das Aufsticken im Durchlaufglühofen eingebrachte Stickstoffanteil ∆N = N - N0 (Tabelle 1) zusammen, wobei ein wesentlicher Anteil des gesamten Stickstoffgehalts $N_{frei}$ in ungebundener Form und der Rest in gebundener Form als Nitrid vorliegt, s. Formel (2). Aus dem Gewichtsanteil der im Stahl vorhandenen Nitridbildner lässt sich über Formel (2) der Gewichtsanteil des freien Stickstoffs $N_{frei}$ abschätzen.

Bei den nicht-erfindungsgemäßen Stahlflachprodukten, die zu Vergleichszwecken hergestellt worden sind, wurde auf eine Aufstickung im Durchlaufglühofen verzichtet (d.h. 100% HNx-Schutzgasatmosphäre im Durchlaufglühofen während des Glühens). Die Stickstoffkonzentration N der Vergleichsproben entspricht daher der anfänglichen Stickstoffkonzentration N0 in der Stahlschmelze.

Nach der thermischen Behandlung in dem Durchlaufglühofen wurden die kaltgewalzten und rekristallisierend geglühten Stahlflachprodukte einem Nachwalzen unterzogen. Die Verfahrensparameter der Herstellungsverfahren, einschl. der Nachwalzgrade (NWG) des zweiten Kaltwalzens sind in **Tabelle 2** aufgeführt. Dabei bezeichnet $T_E$ die Endwalztemperatur des Warmbands, $T_H$ die Haspeltemperatur (Aufwickeltemperatur des Warmbands), $T_G$ die Glühtemperatur im Glühofen, $t_G$ die gesamte Glühdauer des Stahlblechs im Glühofen, $t_H$ die Haltezeit, in der das Stahlblech auf der Glühtemperatur gehalten wurde, $v_K$ die Abkühlgeschwindigkeit nach dem Glühen im Glühofen und NWG den Nachwalzgrad beim sekundären Kaltwalzen. Abschließend wurde nach dem Nachwalzen eine künstliche Alterung der Stahlflachprodukte durch Erwärmen der Probe für 20 Minuten auf 200°C erzeugt.

An den gealterten Proben wurden Zugversuche zur Ermittlung der Zugfestigkeit in Walzrichtung (Rm in MPa, gemessen gern. DIN EN ISO 6892-1) durchgeführt und die Erichsentiefung (ET in mm, gemessen in einem Tiefungsversuch nach Erichsen gern, der Norm DIN EN ISO 20482 (2003-12)) ermittelt. Die Materialeigenschaften der nachgewalzten Stahlbleche, einschl. der Enddicke (d) nach dem zweiten Kaltwalzen, sind in **Tabelle 3** angegeben, wobei

- d die Dicke des Stahlblechs (in mm),
- ET die an den Proben gemessene Erichsentiefung (in mm), und
- Rm die Zugfestigkeit (in MPa) in Walzrichtung ist.

In Tabelle 3 ist neben der durch den Tiefungsversuch an den Proben der erfindungsgemäßen und der nicht-erfindungsgemäßen Stahlbleche gemessenen Erichsentiefung (ET) auch die rechnerisch aus der Formel

$$ET_b = 11{,}1 \cdot (C + N) + 11{,}01 \cdot d - 0{,}00864 \cdot Rm + 7{,}524 \qquad \text{(Formel 1')}$$

ermittelte Erichsentiefung ($ET_b$) sowie die Differenz zwischen der gemessenen Erichsentiefung und der rechnerisch ermittelten Erichsentiefung (∆ET = ET - $ET_b$) angeführt.

Nach der Messung der mechanischen Eigenschaften, insbesondere der Dicke d, der Zugfestigkeit Rm und der Erichsentiefung ET, wurden die Proben mit organischen Beschichtungen versehen, nämlich einem BPA-freien Polyester-Lack mit einer Lackschichtdicke von 5 μm auf jeder Seite oder einer PET-Folie mit einer Foliendicke von 12 μm. Anschließend wurde erneut die Erichsentiefung in einem Tiefungsversuch gemessen. Die Ergebnisse sind aus den Spalten "Delta Lack" und "Delta Folie" der Tabelle 3 zu entnehmen, welche jeweils die Differenz der Erichsentiefung des unbeschichteten Stahlblechs und der Erichsentiefung des lackierten bzw. des folienbeschichteten Stahlblechs angeben.

Die an den unbeschichteten Stahlflachprodukten (also ohne Lack- oder Folienbeschichtung) gemessenen Werte der Erichsentiefung (ET in mm) sind in Figur 1 über die Dicke der Stahlflachprodukte (d in mm) aufgetragen, wobei die Punkte die an den einzelnen Proben gemessenen Werte der Erichsentiefung darstellen und die mit einer Verbindungslinie jeweils damit verbunden Querstriche den rechnerisch gemäß Formel (1') berechneten Wert der Erichsentiefung darstellen. Dabei charakterisiert eine Abweichung nach oben einen höheren berechneten Wert ($ET_b$) und eine Abweichung nach unten einen niedrigeren berrechneten Wert im Vergleich zum Messwert der Erichsentiefung (ET). Aus Figur 1 ist ersichtlich, dass die erfindungsgemäßen Stahlflachprodukte, deren gemessene Erichsentiefung mit einem ausgefüllten Punkt gekennzeichnet ist, jeweils einen Messwert aufweisen, der oberhalb der gemäß Formel (1') berechneten Erichsentiefung ($ET_b$) liegt, d.h. die erfindungsgemäßen Proben erfüllen die Bedingung der Formel (1). Die nicht-erfindungsgemäßen Vergleichsproben, deren gemessene Erichsentiefung ET jeweils mit einem Kreis gekennzeichnet ist, weisen dagegen einen Messwert auf, der unterhalb der berechneten Erichsentiefung ($ET_b$) gemäß Formel (1') liegt, d.h. die nicht-erfindungsgemäßen Vergleichsproben erfüllen die Bedingung der Formel (1) nicht.

Dies wird anhand von Figur 2 verdeutlicht, in der jeweils die Differenz ∆ET (in mm) der an den Proben aus den Tabellen 1 bis 3 gemessenen Werte der Erichsentiefung (ET) und der aus Formel (1') berechneten Werte der Erichsentiefung ($ET_b$) dargestellt und über der Nummer des jeweiligen Beispiels aus den Tabellen 1 bis 3 aufgetragen ist, wobei

$$\Delta ET = ET - ET_b$$

gilt und ET der Messwert der Erichsentiefung (in mm) und $ET_b$ der gemäß Formel (1') aus den Eigenschaften der Proben gemäß Tabelle 3 rechnerisch ermittelte Wert der Erichsentiefung darstellt. Wie aus Figur 2 ersichtlich, erfüllen alle erfindungsgemäßen Proben der Beispiele 6 bis 14 die Bedingung der Formel (1), während alle Vergleichsbeispiele, bis auf Beispiel 5, diese Bedingung nicht erfüllen. Aus Tabelle 3 ist dabei ersichtlich, dass die Proben des Beispiels 5 jedoch eine zu niedrige Zugfestigkeit von Rm < 600 MPa aufweisen, und daher nicht als erfindungsgemäß charakterisiert werden können.

Mit der Erfindung können daher Stahlflachprodukte hergestellt und in Bezug auf ihre Eignung zur Herstellung von Verpackungen, wie Aerosoldosen, oder Teile davon (wie z.B. Aufreißdeckel), charakterisiert werden, wobei über die Relation der Formel (1) insbesondere der Zusammenhang zwischen der Umformfähigkeit, charakterisiert durch die Erichsentiefung, und den mechanischen Eigenschaften, nämlich der Dicke und der Festigkeit (speziell der Zugfestigkeit in Walzrichtung) berücksichtigt wird. Durch Anwendung der Formel (1) kann dabei die Eignung der Stahlflachprodukte zur Herstellung von bestimmten Verpackungen oder Teilen davon festgestellt werden. So kann bspw. ermittelt werden, ob bei einer gegebenen Dicke des Stahlblechs und einer gegebenen Zugfestigkeit ein ausreichend hohes Umformvermögen vorliegt, um eine bestimmte Verpackung oder ein bestimmtes Teil davon in einem dazu geeigneten Umformverfahren erzeugt werden kann.

**Tabelle 1**

| Nr. | | C | N0 | N | C+N | Al | Mn | Si | P | S |
|---|---|---|---|---|---|---|---|---|---|---|
| | | | | | Komposition (in Gew. %) | | | | | |
| 1 | Vergleichsbeispiel | 0,066 | 0,0029 | 0,0029 | 0,0689 | 0,037 | 0,29 | 0,008 | 0,015 | 0,007 |
| 2 | Vergleichsbeispiel | 0,017 | 0,0035 | 0,0152 | 0,0322 | 0,028 | 0,19 | 0,005 | 0,010 | 0,009 |
| 3 | Vergleichsbeispiel | 0,045 | 0,0143 | 0,0143 | 0,0593 | 0,009 | 0,22 | 0,005 | 0,013 | 0,012 |
| 4 | Vergleichsbeispiel | 0,021 | 0,0026 | 0,0026 | 0,0236 | 0,035 | 0,20 | 0,006 | 0,012 | 0,009 |
| 5 | Vergleichsbeispiel | 0,056 | 0,0042 | 0,0144 | 0,0704 | 0,022 | 0,22 | 0,007 | 0,014 | 0,009 |
| 6 | Erfindungsgemäß | 0,079 | 0,0114 | 0,0225 | 0,1015 | 0,011 | 0,33 | 0,006 | 0,014 | 0,008 |
| 7 | Erfindungsgemäß | 0,081 | 0,0128 | 0,0198 | 0,1008 | 0,032 | 0,32 | 0,005 | 0,012 | 0,008 |
| 8 | Erfindungsgemäß | 0,072 | 0,0087 | 0,0156 | 0,0876 | 0,035 | 0,31 | 0,008 | 0,013 | 0,009 |
| 9 | Erfindungsgemäß | 0,071 | 0,0118 | 0,0352 | 0,1062 | 0,015 | 0,33 | 0,006 | 0,011 | 0,010 |
| 10 | Erfindungsgemäß | 0,075 | 0,0135 | 0,0417 | 0,1167 | 0,017 | 0,35 | 0,006 | 0,012 | 0,008 |
| 11 | Erfindungsgemäß | 0,070 | 0,0133 | 0,0249 | 0,0949 | 0,012 | 0,32 | 0,007 | 0,013 | 0,008 |
| 12 | Erfindungsgemäß | 0,042 | 0,0057 | 0,0211 | 0,0631 | 0,031 | 0,02 | 0,005 | 0,013 | 0,008 |
| 13 | Erfindungsgemäß | 0,069 | 0,0123 | 0,0246 | 0,0936 | 0,013 | 0,32 | 0,007 | 0,013 | 0,009 |
| 14 | Erfindungsgemäß | 0,067 | 0,0120 | 0,0198 | 0,0872 | 0,012 | 0,30 | 0,006 | 0,012 | 0,010 |

Weitere Bestandteile: Mo < 0,006 Gew. %, Cr < 0,032 Gew. %, Ni < 0,013 Gew. %, Cu < 0,013 Gew. %, Ti < 0,001 Gew. %, B < 0,004 Gew. %, Nb < 0,002 Gew. %, Sn < 0,008 Gew. %, Rest: Eisen

**Tabelle 2**

| Nr. | | $T_E$ (°C) | $T_H$ (°C) | $T_G$ (°C) | $t_G$ (s) | $t_H$ (s) | $v_K$ (K/s) | NWG (%) |
|---|---|---|---|---|---|---|---|---|
| 1 | Vergleichsbeispiel | 875 | 573 | 665 | 157 | 45 | 11 | 13 |
| 2 | Vergleichsbeispiel | 888 | 635 | 673 | 146 | 42 | 18 | 35 |
| 3 | Vergleichsbeispiel | 876 | 658 | 621 | 230000 | - | 0,005 | 29 |
| 4 | Vergleichsbeispiel | 891 | 629 | 654 | 132 | 38 | 12 | 40 |
| 5 | Vergleichsbeispiel | 882 | 667 | 667 | 132 | 38 | 15 | 8 |
| | | | | | | | | |
| 6 | Erfindungsgemäß | 853 | 559 | 642 | 132 | 38 | 15 | 13 |
| 7 | Erfindungsgemäß | 863 | 567 | 638 | 167 | 48 | 20 | 14 |
| 8 | Erfindungsgemäß | 864 | 582 | 642 | 146 | 42 | 9 | 9 |
| 9 | Erfindungsgemäß | 871 | 575 | 640 | 157 | 45 | 13 | 15 |
| 10 | Erfindungsgemäß | 848 | 563 | 646 | 132 | 38 | 6 | 16 |
| 11 | Erfindungsgemäß | 848 | 569 | 635 | 132 | 38 | 10 | 8 |
| 12 | Erfindungsgemäß | 868 | 573 | 639 | 132 | 38 | 11 | 14 |
| 13 | Erfindungsgemäß | 866 | 576 | 641 | 132 | 38 | 7 | 12 |
| 14 | Erfindungsgemäß | 871 | 571 | 645 | 153 | 44 | 8 | 12 |

**Tabelle 3**

| Nr. | d (mm) | Rm (MPa) | ET (mm) | $ET_b$ (mm) | $\Delta ET$ (mm) | Delta Lack (mm) | Delta Folie (mm) |
|---|---|---|---|---|---|---|---|
| 1 | 0,18 | 639 | 4,5 | 4,74963 | -0,2496 | -0,1496 | -0,3496 |
| 2 | 0,28 | 663 | 5,0 | 5,2359 | -0,2359 | -0,1359 | 0,0359 |
| 3 | 0,25 | 628 | 4,9 | 5,50881 | -0,6088 | -0,6088 | -0,4088 |
| 4 | 0,22 | 617 | 4,4 | 4,87728 | -0,4773 | -0,37228 | -0,1773 |
| 5 | 0,22 | 583 | 6,0 | 5,69052 | 0,3095 | 0,2095 | 0,3095 |
| | | | | | | | |
| 6 | 0,14 | 680 | 4,5 | 4,31685 | 0,1832 | 0,3831 | 0,2832 |
| 7 | 0,45 | 710 | 7,7 | 7,46298 | 0,2370 | 0,3370 | 0,5370 |
| 8 | 0,27 | 605 | 6,5 | 6,24186 | 0,2581 | 0,5581 | 0,4581 |
| 9 | 0,32 | 763 | 5,9 | 5,6337 | 0,266 | 0,4663 | 0,3663 |
| 10 | 0,24 | 806 | 4,8 | 4,49793 | 0,3021 | 0,5021 | 0,5021 |
| 11 | 0,16 | 609 | 5,4 | 5,07723 | 0,3228 | 0,5228 | 0,6228 |
| 12 | 0,18 | 621 | 5,1 | 4,84077 | 0,2592 | 0,4592 | 0,3592 |
| 13 | 0,21 | 644 | 5,7 | 5,3109 | 0,389 | 0,4891 | 0,5891 |
| 14 | 0,31 | 674 | 6,8 | 6,08166 | 0,7183 | 0,9183 | 0,9183 |

**Patentansprüche**

1.  Stahlflachprodukt für Verpackungen umfassend ein kaltgewalztes Stahlblech mit einer Dicke (d) von weniger als 0,5 mm und folgender Zusammensetzung in Bezug auf das Gewicht:

- C: mehr als 0,04 % und weniger als 0,1 %,
- Si: weniger als 0,10 %,
- Mn: 0,10 bis 0,60 %
- P: weniger als 0,10 %,
- S: weniger als 0,03 %,
- Al: weniger als 0,05 %, bevorzugt weniger als 0,018 %,
- N: mehr als 0,014 %, bevorzugt mehr als 0,015 %,
- optional Cr: weniger als 0,1 %, bevorzugt 0,01 bis 0,05%,
- optional Ni: weniger als 0,1 %, bevorzugt 0,01 bis 0,05 %,
- optional Cu: weniger als 0,1 %, bevorzugt 0,002 bis 0,05 %,
- optional Ti: weniger als 0,01 %,
- optional B: weniger als 0,005 %,
- optional Nb: weniger als 0,01 %,
- optional Mo: weniger als 0,02 %,
- optional Sn: weniger als 0,03 %,
- Rest Eisen und unvermeidbare Verunreinigungen,

wobei die Summe des auf das Gewicht bezogenen Kohlenstoffanteils (C) und des Stickstoffanteils (N) mindestens 0,050 % beträgt und das Stahlflachprodukt eine Zugfestigkeit (Rm) gemessen gemäß DIN EN ISO 6892-1 von mindestens 600 MPa und eine von der Dicke (d in mm), dem Kohlenstoffanteil (C in Gew. %) und dem Stickstoffanteil (N in Gew. %) sowie der Zugfestigkeit (Rm in MPa) des Stahlblechs abhängige Erichsentiefung von

$$ET \geq 11,1 \cdot (C + N) + 11,01 \cdot d - 0,00864 \cdot Rm + 7,524$$

aufweist, wobei ET die Erichsentiefung in mm ist und gemäß DIN EN ISO 20482 gemessen wird.

2. Stahlflachprodukt nach Anspruch 1, **dadurch gekennzeichnet, dass** das Stahlblech folgende Zusammensetzung in Bezug auf das Gewicht aufweist:

- Si: mehr als 0,003 % und weniger als 0,03 %,
- Mn: mehr als 0,17 und weniger als 0,5 %,
- P: mehr als 0,003 % und weniger als 0,03 %,
- S: mehr als 0,001 % und weniger als 0,03 %,
- Al: mehr als 0,002 % und weniger als 0,018 %,
- N: mehr als 0,014 und weniger als 0,07 %.

3. Stahlflachprodukt nach einem der voranstehenden Ansprüche, **dadurch gekennzeichnet, dass** die Dicke des Stahlblechs größer als 0,14 mm ist.

4. Stahlflachprodukt nach einem der voranstehenden Ansprüche, **dadurch gekennzeichnet, dass** das Stahlflachprodukt eine organische Beschichtung, insbesondere eine Polymerbeschichtung aus einem thermoplastischen Kunststoff oder eine Lackierung, umfasst.

5. Stahlflachprodukt nach Anspruch 4, **dadurch gekennzeichnet, dass** die organische Beschichtung eine Polymerbeschichtung aus einem Polyester, insbesondere aus Polyethylentherephthalat (PET) oder aus Polyethylen (PE) oder Polypropylen (PP) oder einer Mischung davon ist.

6. Stahlflachprodukt nach Anspruch 4, **dadurch gekennzeichnet, dass** die organische Beschichtung einen Lack, insbesondere einen BPA-NI-Lack oder einen wasserlöslichen Lack umfasst.

7. Stahlflachprodukt nach einem der Ansprüche 4 bis 6, **dadurch gekennzeichnet, dass** die organische Beschichtung eine Beschichtungsdicke von 5 bis 100 $\mu$m aufweist.

8. Stahlflachprodukt nach einem der voranstehenden Ansprüche, **dadurch gekennzeichnet, dass** die Erichsentiefung des unbeschichteten Stahlblechs bei einer Dicke des Stahlblechs im Bereich von 0,14 bis 0,25 mm mindestens 4,3 mm und bei einer Dicke des Stahlblechs im Bereich von 0,26 bis 0,49 mm mindestens 5,3 mm beträgt.

9. Stahlflachprodukt nach einem der Ansprüche 4 bis 8, **dadurch gekennzeichnet, dass** das mit der organischen Beschichtung beschichtete Stahlblech eine Erichsentiefung aufweist, die um mindestens 0,1 mm größer ist als die Erichsentiefung des unbeschichteten Stahlblechs.

10. Stahlflachprodukt nach einem der voranstehenden Ansprüche, **dadurch gekennzeichnet, dass** das Stahlblech erhältlich ist durch

> - Erhitzen einer Stahlbramme auf eine Vorwärmtemperatur von mindestens 1200°C und Warmwalzen der Stahlbramme bis zu einer Endwalztemperatur von höchstens 900°C zur Erzeugung eines Warmbands,
> - Aufwickeln des Warmbands bei einer Aufwickeltemperatur von 670°C oder weniger, bevorzugt von weniger als 590°C,
> - Kaltwalzen des Warmbands mit einem Kaltwalzgrad von mindestens 80 % zur Erzeugung eines kaltgewalzten Stahlblechs,
> - Glühen des kaltgewalzten Stahlblechs in einem Glühofen, insbesondere einem Durchlaufglühofen, bei einer Glühtemperatur zwischen der Rekristallisationstemperatur des Stahls und 700°C, bevorzugt zwischen 630°C und 670°C,
> - Aufsticken des kaltgewalzten Stahlblechs in dem Glühofen, insbesondere vor oder während des Glühens, auf einen Stickstoffanteil von mehr als 0,014 Gew. %,
> - Nachwalzen des aufgestickten und geglühten Stahlblechs mit einem Nachwalzgrad zwischen 7 % und 20 %.

11. Stahlflachprodukt nach Anspruch 10, wobei das Warmband nach dem Endwalzen mit einer Kühlrate von mindestens 15 K/s auf die Aufwickeltemperatur abgekühlt wird.

12. Stahlflachprodukt nach Anspruch 10 oder 11, wobei das Glühen während einer Glühdauer von 30 Sekunden bis 180 Sekunden erfolgt.

13. Stahlflachprodukt nach einem der Ansprüche 10 bis 12, wobei das kaltgewalzte Stahlblech nach dem Glühen mit einer Kühlrate von 2 K/s bis 25 K/s, bevorzugt zwischen 5 K/s und 20 K/s, abgekühlt wird.

14. Stahlflachprodukt nach einem der Ansprüche 10 bis 13, wobei das Warmband vor dem Kaltwalzen gebeizt und/oder nach dem Kaltwalzen entfettet wird.

**Claims**

1. A flat steel product for packaging comprising a cold rolled steel sheet having a thickness (d) of less than 0.5 mm and the following composition by weight:

> - C: more than 0.04 % and less than 0.1 %,
> - Si: less than 0.10 %,
> - Mn: 0.10 to 0.60 %
> - P: less than 0.10 %,
> - S: less than 0.03 %,
> - Al: less than 0.05 %, preferably less than 0.018 %,
> - N: more than 0.014 %, preferably more than 0.015 %,
> - optional Cr: less than 0.1 %, preferably 0.01 to 0.05 %,
> - optional Ni: less than 0.1 %, preferably 0.01 to 0.05 %,
> - optionally Cu: less than 0.1 %, preferably 0.002 to 0.05 %,
> - optional Ti: less than 0.01 %,
> - optional B: less than 0.005 %,
> - optional Nb: less than 0.01 %,
> - optional Mo: less than 0.02 %,
> - optional Sn: less than 0.03 %,
> - Residual iron and unavoidable impurities,
> wherein the sum of the carbon content (C) and the nitrogen content (N) based on the weight is at least 0.050% and the flat steel product has a tensile strength (Rm) of at least 600 MPa and an Erichsen value dependent on the thickness (d in mm), the carbon content (C in % by weight) and the nitrogen content (N in % by weight) and the tensile strength (Rm in MPa) of the steel sheet of

$$ET \geq 11.1 \cdot (C + N) + 11.01 \cdot d - 0.00864 \cdot Rm + 7.524$$

where ET is the Erichsen value·in mm and is measured in accordance with DIN EN ISO 20482.

2. The flat steel product according to claim 1, **characterised in that** the sheet steel has the following composition in terms of weight:

   - Si: more than 0.003 % and less than 0.03 %,
   - Mn: more than 0.17 and less than 0.5 %,
   - P: more than 0.003 % and less than 0.03 %,
   - S: more than 0.001 % and less than 0.03 %,
   - Al: more than 0.002 % and less than 0.018 %,
   - N: more than 0.014 and less than 0.07 %.

3. The flat steel product according to one of the preceding claims, **characterised in that** the thickness of the steel sheet is greater than 0.14 mm.

4. The flat steel product according to one of the preceding claims, **characterised in that** the flat steel product comprises an organic coating, in particular a polymer coating of a thermoplastic material or a lacquering.

5. The flat steel product according to claim 4, **characterised in that** the organic coating is a polymer coating of a polyester, in particular of polyethylene terephthalate (PET) or of polyethylene (PE) or polypropylene (PP) or a mixture thereof.

6. The flat steel product according to claim 4, **characterised in that** the organic coating comprises a lacquer, in particular a BPA-NI lacquer or a water-soluble lacquer.

7. The flat steel product according to one of claims 4 to 6, **characterised in that** the organic coating has a coating thickness of 5 to 100 $\mu$m.

8. The flat steel product according to one of the preceding claims, **characterised in that** the Erichsen value of the uncoated steel sheet is at least 4.3 mm for a thickness of the steel sheet in the range from 0.14 to 0.25 mm and at least 5.3 mm for a thickness of the steel sheet in the range from 0.26 to 0.49 mm.

9. The flat steel product according to any one of claims 4 to 8, **characterised in that** the steel sheet coated with the organic coating has an Erichsen value which is at least 0.1 mm greater than the Erichsen value of the uncoated steel sheet.

10. The flat steel product according to one of the preceding claims, **characterised in that** the steel sheet is obtainable by

    - Heating a steel slab to a preheating temperature of at least 1200°C and hot rolling the steel slab to a final rolling temperature of at most 900°C to produce a hot strip,
    - Winding of the hot strip at a winding temperature of 670°C or less, preferably less than 590°C,
    - Cold rolling of the hot strip with a cold rolling degree of at least 80 % to produce a cold-rolled steel sheet,
    - Annealing of the cold-rolled steel sheet in an annealing furnace, in particular a continuous annealing furnace, at an annealing temperature between the recrystallisation temperature of the steel and 700°C, preferably between 630°C and 670°C,
    - Nitriding the cold-rolled steel sheet in the annealing furnace, in particular before or during annealing, to a nitrogen content of more than 0.014 % by weight,
    - Re-rolling of the nitrided and annealed steel sheet with a degree of re-rolling between 7 % and 20 %.

11. The flat steel product according to claim 10, wherein the hot strip is cooled to the coiling temperature at a cooling rate of at least 15 K/s after hot rolling.

**12.** The flat steel product according to claim 10 or 11, wherein the annealing takes place during an annealing time of 30 seconds to 180 seconds.

**13.** The flat steel product according to any one of claims 10 to 12, wherein the cold-rolled steel sheet is cooled after annealing at a cooling rate of 2 K/s to 25 K/s, preferably between 5 K/s and 20 K/s.

**14.** The flat steel product according to any one of claims 10 to 13, wherein the hot strip is pickled before cold rolling and/or degreased after cold rolling.

**Revendications**

**1.** Produit plat en acier pour emballages comprenant une tôle en acier laminée à froid ayant une épaisseur (d) inférieure à 0,5 mm et une composition suivante par rapport au poids :

- C : plus de 0,04 % et moins de 0,1 %,
- Si : moins de 0,10 %,
- Mn : 0,10 à 0,60 %,
- P : moins de 0,10 %,
- S : moins de 0,03 %,
- Al : moins de 0,05 %, de préférence moins de 0,018 %,
- N : plus de 0,014 %, de préférence plus de 0,015 %,
- éventuellement Cr : moins de 0,1 %, de préférence 0,01 à 0,05 %,
- éventuellement Ni : moins de 0,1 %, de préférence 0,01 à 0,05 %,
- éventuellement Cu : moins de 0,1 %, de préférence 0,002 à 0,05 %,
- éventuellement Ti : moins de 0,01 %,
- éventuellement B : moins de 0,005 %,
- éventuellement Nb : moins de 0,01 %,
- éventuellement Mo : moins de 0,02 %,
- éventuellement Sn : moins de 0,03 %,
- le reste de fer et d'impuretés inévitables,

dans lequel la somme de la proportion de carbone (C) rapportée au poids et de la proportion d'azote (N) atteint au moins 0,050 % et le produit plat en acier présente une résistance à la traction (Rm) mesurée selon la norme DIN EN ISO 6892-1 d'au moins 600 MPa et un emboutissage selon Erichsen dépendant de l'épaisseur (d en mm), de la proportion de carbone (C en % en poids) et de la proportion d'azote (N en % en poids) ainsi que de la résistance à la traction (Rm en MPa) de la tôle en acier de

$$ET \geq 11{,}1 \cdot (C + N) + 11{,}01 \cdot d - 0{,}00864 \cdot Rm + 7{,}524$$

où ET est l'emboutissage selon Erichsen en mm et est mesuré d'après la norme DIN EN ISO 20482.

**2.** Produit plat en acier selon la revendication 1, **caractérisé en ce que** la tôle en acier présente la composition suivante par rapport au poids :

- Si : plus de 0,003 % et moins de 0,03 %
- Mn : plus de 0,17 et moins de 0,5 %,
- P : plus de 0,003 % et moins de 0,03 %,
- S : plus de 0,001 % et moins de 0,03 %,
- Al : plus de 0,002 % et moins de 0,018 %,
- N : plus de 0,014 % et plus de 0,07 %.

**3.** Produit plat en acier selon l'une des revendications précédentes, **caractérisé en ce que** l'épaisseur de la tôle en acier est supérieure à 0,14 mm.

**4.** Produit plat en acier selon l'une des revendications précédentes, **caractérisé en ce que** le produit plat en acier comprend un revêtement organique, en particulier un revêtement polymère en un matériau plastique thermoplastique ou un laquage.

**5.** Produit plat en acier selon la revendication 4, **caractérisé en ce que** le revêtement organique est un revêtement polymère en un polyester, en particulier en polyéthylène téréphtalate (PET) ou en polyéthylène (PE) ou en polypropylène (PP) ou en un mélange de ceux-ci.

**6.** Produit plat en acier selon la revendication 4, **caractérisé en ce que** le revêtement organique comprend une laque, en particulier une laque BPA-NI ou une laque hydrosoluble.

**7.** Produit plat en acier selon l'une des revendications 4 à 6, **caractérisé en ce que** le revêtement organique présente une épaisseur de revêtement de 5 à 100 $\mu$m.

**8.** Produit plat en acier selon l'une des revendications précédentes, **caractérisé en ce que** l'emboutissage selon Erichsen de la tôle en acier non revêtue est d'au moins 4,3 mm pour une épaisseur de la tôle en acier dans la plage de 0,14 à 0,25 mm et d'au moins 5,3 mm pour une épaisseur de la tôle en acier dans la plage de 0,26 à 0,49 mm.

**9.** Produit plat en acier selon l'une des revendications 4 à 8, **caractérisé en ce que** la tôle en acier revêtue avec le revêtement organique présente un emboutissage selon Erichsen qui est supérieur d'au moins 0,1 mm à l'emboutissage selon Erichsen de la tôle en acier non revêtue.

**10.** Produit plat en acier selon l'une des revendications précédentes, **caractérisé en ce que** la tôle en acier peut être obtenue par

- chauffage d'une brame en acier à une température de préchauffage d'au moins 1200 °C et laminage à chaud de la brame en acier jusqu'à une température de laminage final d'au maximum 900 °C pour la production d'un feuillard à chaud,
- enroulement du feuillard à chaud à une température d'enroulement de 670 °C ou moins, de préférence de moins de 590 °C,
- laminage à froid du feuillard à chaud à un degré de laminage à froid d'au moins 80 % pour la production d'une tôle en acier laminée à froid,
- recuit de la tôle en acier laminée à froid dans un four de recuit, en particulier un four de recuit continu, à une température de recuit entre la température de recristallisation de l'acier et 700 °C, de préférence entre 630 °C et 670 °C,
- nitruration de la tôle en acier laminée à froid dans le four de recuit, en particulier avant ou pendant le recuit, jusqu'à une proportion d'azote supérieure à 0,014 % en poids,
- relaminage de la tôle en acier nitrurée et recuite à un degré de relaminage entre 7 % et 20 %.

**11.** Produit plat en acier selon la revendication 10, dans lequel le feuillard à chaud est refroidi après le laminage final à une vitesse de refroidissement d'au moins 15 K/s jusqu'à la température d'enroulement.

**12.** Produit plat en acier selon la revendication 10 ou 11, dans lequel le recuit s'effectue pendant une durée de recuit de 30 secondes à 180 secondes.

**13.** Produit plat en acier selon l'une des revendications 10 à 12, dans lequel la tôle en acier laminée à froid est refroidie après le recuit à une vitesse de refroidissement de 2 K/s à 25 K/s, de préférence entre 5 K/s et 20 K/s.

**14.** Produit plat en acier selon l'une des revendications 10 à 13, dans lequel le feuillard à chaud est décapé avant le laminage à froid et/ou dégraissé après le laminage à froid.

Fig. 1

Fig. 2

**EP 3 894 604 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2835438 B1
- WO 2016031234 A
- US 20110076177 A1